(19) Europäisches Patentamt
European Patent Office
Office européen des brevets

(11) EP 0 641 456 B1

(12) **EUROPÄISCHE PATENTSCHRIFT**

(45) Veröffentlichungstag und Bekanntmachung des Hinweises auf die Patenterteilung:
**18.12.1996 Patentblatt 1996/51**

(21) Anmeldenummer: **93906621.3**

(22) Anmeldetag: **26.03.1993**

(51) Int Cl.[6]: **G02F 1/1337**, C08G 73/12, C08F 222/40

(86) Internationale Anmeldenummer:
**PCT/EP93/00740**

(87) Internationale Veröffentlichungsnummer:
**WO 93/21556 (28.10.1993 Gazette 1993/26)**

(54) **MALEINIMID COPOLYMER ALS ORIENTIERUNGSSCHICHT FÜR FLÜSSIGKRISTALLDISPLAYS**

MALEIC IMIDE COPOLYMER USED AS THE ORIENTATION FILM FOR LIQUID-CRYSTAL DISPLAYS

COPOLYMERE MALEIMIQUE SERVANT DE COUCHE D'ORIENTATION POUR DES AFFICHAGES A CRISTAUX LIQUIDES

(84) Benannte Vertragsstaaten:
**DE GB**

(30) Priorität: **17.04.1992 DE 4212893**
**02.09.1992 DE 4229194**

(43) Veröffentlichungstag der Anmeldung:
**08.03.1995 Patentblatt 1995/10**

(73) Patentinhaber: **HOECHST AKTIENGESELLSCHAFT**
**65926 Frankfurt am Main (DE)**

(72) Erfinder:
- **RÖSCHERT, Horst**
**D-6531 Ober-Hilbersheim (DE)**
- **RÖSCH, Norbert**
**D-6000 Frankfurt am Main (DE)**
- **WEGENER, Peter**
**D-6240 Königstein/Taunus (DE)**

(56) Entgegenhaltungen:
**EP-A- 0 324 547** **EP-A- 0 351 718**
**WO-A-89/05996**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 641 456 B1

Printed by Jouve, 75001 PARIS (FR)

## Beschreibung

Schalt- und Anzeigevorrichtungen, die ferroelektrische Flüssigkristall-Mischungen enthalten (FLC-Displays), sind beispielsweise aus EP-B 0 032 362 (= US-A 4 367 924) bekannt. Flüssigkristalldisplays sind Vorrichtungen, die z. B. aufgrund elektrischer Beschaltung ihre optischen Transmisisonseigenschaften derart ändern, daß durchfallendes (und gegebenenfalls wieder reflektiertes) Licht intensitätsmoduliert wird. Beispiele sind die bekannten Uhren- und Taschenrechneranzeigen oder Flüssigkristalldisplays im OA- (office automation) oder TV (television) Bereich (siehe auch Liquid Crystal Device Handbook, Nikkan Kogyo Shimbun, Tokyo, 1989; ISBN 4-526-02590-9C 3054 und darin zitierte Arbeiten).

Diese FLC-Displays sind so aufgebaut, daß eine ferroelektrische Flüssigkristallschicht beiderseitig von Schichten eingeschlossen ist, die üblicherweise, in dieser Reihenfolge ausgehend von der FLC-Schicht, mindestens eine Orientierungsschicht, Elektroden und eine Begrenzungsscheibe (z. B. aus Glas) sind. Außerdem enthalten sie einen Polarisator, sofern sie im "guest-host"- oder im reflexiven Modus betrieben werden, oder zwei Polarisatoren, wenn als Modus die transmissive Doppelbrechung ("birefringence mode") genutzt wird. Die Schalt- und Anzeigeelemente können gegebenenfalls weitere Hilfsschichten, z. B. Diffusionssperr- oder Isolationsschichten, enthalten.

Die Orientierungsschichten, die aus einem organischen (z. B. Polyimid, Polyamid und Polyvinylalkohol) oder anorganischen (z. B. SiO) Material bestehen, bringen, gemeinsam mit einem hinreichend klein gewählten Abstand der Begrenzungsscheiben, die FLC-Moleküle der Mischung in eine Konfiguration, bei der die Moleküle mit ihren Längsachsen parallel zueinander liegen und die smektischen Ebenen senkrecht oder schräg zur Orientierungsschicht angeordnet sind. In dieser Anordnung haben die Moleküle bekanntlich zwei gleichwertige Orientierungen, zwischen denen sie durch pulsartiges Anlegen eines elektrischen Feldes geschaltet werden können, d. h., FLC-Displays sind bistabil schaltbar. Die Schaltzeiten sind umgekehrt proportional zur spontanen Polarisation der FLC-Mischung und liegen im Bereich von µs.

Es wurde nun überraschend gefunden, daß Polymere, die Monomereinheiten aus Maleinimid enthalten, vorteilhaft als Orientierungsschichten in Flüssigkristalldisplays, insbesondere ferroelektrischen, eingesetzt werden können.

Derartige Polymere wurden bislang als Bindemittel in Photoresistmaterialien eingesetzt, wie z. B. in US 720 445, EP 0 140 273 sowie EP 0 234 327 dargelegt. Ihre Anwendung als Orientierungsschicht in LC-Displays, insbesondere FLC-Displays, ist jedoch noch nicht beschrieben.

Die Erfindung betrifft somit die Verwendung eines Polymers, das Maleinimideinheiten der allgemeinen Formel I enthält,

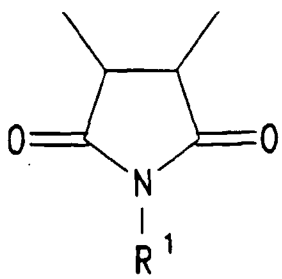

I

in der

$R^1$ Wasserstoff, einen acyclischen oder cyclischen aliphatischen-, einen aromatischen- oder araliphatischen Rest bedeutet, der chiral oder achiral ist, durch funktionelle Gruppen ein- oder mehrfach substituiert sein kann und bei dem eine oder mehrere $CH_2$-Gruppen durch funktionelle Gruppen ersetzt sein können,

als Orientierungsschicht in Flüssigkristalldisplays, bevorzugt in ferroelektrischen Flüssigkristalldisplays.

Bevorzugt bedeutet $R^1$ Wasserstoff, einen aromatischen, aliphatischen oder araliphatischen Ring mit 6 bis 24 C-Atomen oder einen verzweigten oder unverzweigten aliphatischen Rest mit 1 bis 40 C-Atomen, der auch chirale Zentren enthalten kann, bei dem ein oder mehrere Wasserstoffatome unabhängig voneinander durch -OH, -F, -Cl, -Br, -CN, $-NR^2R^3$, $-COOR^2$, $-OR^2$, $-OSi(CH_3)_3$, $-SiR^2{}_2R^3$, $-Si(OR^2)_2R^3$; $-Si(OR^2)_2(OR^3)$, $-OOC-NR^2R^3$ ersetzt sein können, wobei $R^2$, $R^3$ unabhängig voneinander Wasserstoff oder einen Alkylrest mit 1 bis 6 C-Atomen bedeuten, und bei dem ein oder mehrere $CH_2$-Gruppen durch -O-, $-SO_2-$, -CO-, $-CONR^2-$, -HC=CH-, -C≡C- ersetzt sein können.

Besonders bevorzugt bedeutet $R^1$ Wasserstoff, einen verzweigten oder unverzweigten Alkylrest mit 1 bis 20 C-Atomen, bei dem eine $CH_2$-Gruppe durch -O- oder -CO- ersetzt sein kann und bei dem ein oder mehrere Wasserstoffatome durch Fluor ersetzt sein können, $-CH(CH_3)-CH_2-(O-CH_2-CH_2-)_nX$, $-CH_2-CH_2-(O-CH_2-CH_2)_nX$, $-CH_2(CH_3)-CH_2-$

$(O-CH_2-CH(CH_3)-)_nX$, $-CH_2-CH_2(O-CH_2-CH(CH_3)-)_nX$, mit n = 1 bis 10 und X = $-NH_2$, -OH, sowie die Gruppen:

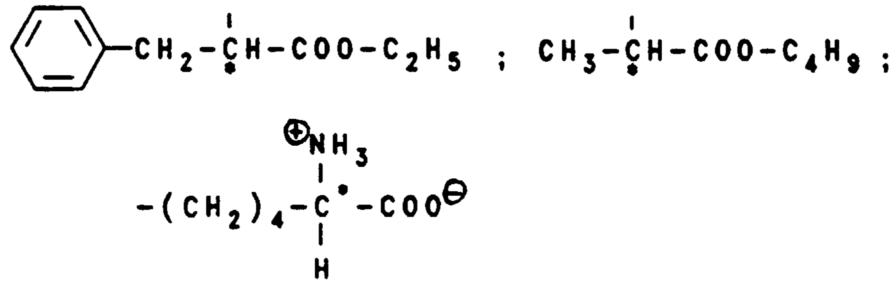

Die Maleinimideinheiten der Formel I befinden sich bevorzugt in der Hauptkette.

Das erfindungsgemäß einzusetzende Polymer kann als Homopolymer nur aus Maleinimideinheiten der Formel I mit identischem $R^1$ oder als Co- und höheres Polymer aus Maleinimideinheiten der Formel I mit unterschiedlichen Resten $R^1$ oder aus Maleinimideinheiten der Formel I und Einheiten, abgeleitet aus polymerisierbaren ethylenisch ungesättigten Verbindungen der allgemeinen Formel II, bestehen,

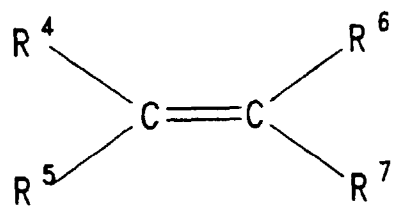

II

in der

$R^4$ bis $R^7$ Wasserstoff aliphatische und/oder aromatische Reste bedeuten, die durch funktionelle Gruppen ein- oder mehrfach substituiert sein können.

Bevorzugt bedeuten $R^4$ bis $R^7$ Wasserstoff, einen aromatischen Rest mit 6 bis 10 C-Atomen oder eine verzweigte oder unverzweigte Alkylgruppe mit 1 bis 10 C-Atomen in der eine oder mehrere nicht benachbarte $CH_2$-Gruppen durch -O-, -OOC-, -COO-, $-Si(CH_3)_2-$ oder $-O-CO-NR^8$ ersetzt sein können, -OH, -Cl, -Br, $-NO_2$, -CN, $-COOR^9$, $-OR^{10}$, $-O-Si(CH_3)_3$, $-O-CONR^{11}R^{12}-$, wobei $R^8$, $R^9$, $R^{10}$, $R^{11}$ und $R^{12}$ Wasserstoff oder ein Alkylrest mit 1 bis 5 C-Atomen ist.

Als olefinische Monomere der Formel II werden besonders bevorzugt Styrole, Vinyl- und Allylether, Vinyl- und Allylester, Vinyl- oder Allyltrimethylsilan, Acrylnitril, Zimtsäureester und Zimtsäurenitril, Acryl- und Methacrylsäureester, Acryl- und Methacrylsäureamide sowie Vinylnaphthaline eingesetzt.

Insbesondere bevorzugt werden Styrole der allgemeinen Formel III und/oder Vinylether/-ester der allgemeinen Formel IV als olefinische Monomere verwendet,

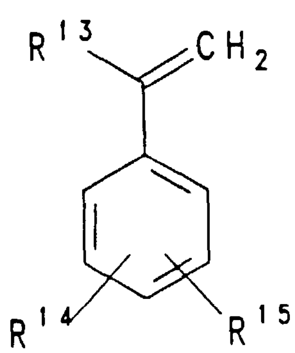

III

$$CH_2 = CHOR^{16} \qquad IV$$

in der

$R^{13}$ Wasserstoff oder Methvl ist und

$R^{14}$ und $R^{15}$ Wasserstoff, Acyl mit 1 bis 5 C-Atomen, -OH, -Cl, -Br, -F, -CN, $-NO_2$, $-NR^{17}R^{18}$, $-COOR^{19}$, $-OOC-R^{20}$, $-O-COOR^{21}$

wobei $R^{17}$ und $R^{18}$, $R^{19}$, $R^{20}$ und $R^{21}$ Wasserstoff oder ein Alkylrest mit 1 bis 5 C-Atomen ist, in dem ein oder mehrere Wasserstoffatome durch -OH, -Cl, -Br, -F, -CN, $-NO_2$ substituiert sein können, und

$R^{16}$ Alkyl mit 1 bis 30 C-Atomen, in dem ein oder mehrere H-Atome durch -OH, -Cl, -Br, -F, -CN, $-NO_2$ substituiert sein können, Acyl mit 1 bis 5 C-Atomen oder eine aromatische Gruppe mit 6 bis 10 C-Atomen sein kann.

Polymere aus Einheiten der Formeln I und II enthalten mindestens 5 %, bevorzugt 25 bis 75 %, besonders bevorzugt 40 bis 60 % Maleinimideinheiten der Formel I.

Die erfindungsgemäß einzusetzenden Polymere sind besonders vorteilhaft Co- oder Terpolymere, bestehend aus 50 % Maleinimideinheiten der allgemeinen Formel I und zusammen 50 % Einheiten aus einem Styrol der allgemeinen Formel III und/oder Einheiten aus einem Vinylether der allgemeinen Formel IV, wobei $R^1$ Wasserstoff, $-CH_2OH$ oder $-C_6H_4-OH$, $R^{10}$ und $R^{11}$ Wasserstoff, $R^{12}$ Wasserstoff oder $C_1$-$C_6$ Alkyl und $R^{13}$ $C_6$-$C_{24}$ Alkyl bedeutet. Das Verhältnis der Einheiten der Formeln III und IV beträgt bevorzugt 100:0 bis 0:100, besonders bevorzugt 100:0 bis 50:50.

Insbesondere vorteilhaft ist ein Polymer der folgenden Formel V einzusetzen

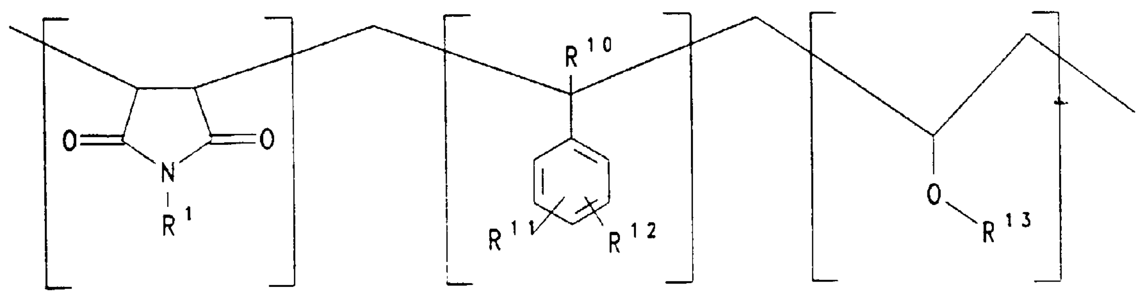

0,5 0,5-0,25 0,1

V

Die erfindungsgemäß einzusetzenden Polymere, insbesondere der allgemeinen Formel V, können ein Molekulargewicht ($M_w$) von 3000 bis 300000, bevorzugt 5000 bis 100000, insbesondere bevorzugt 10000 bis 50000 aufweisen. Das Molgewicht wird durch GPC (Gelpermeations-Chromatographie) bestimmt.

Das Polymer kann durch radikalische Polymerisation mit AIBN oder DBPO als Radikalstarter, in Konzentrationen von 1 bis 5 Mol %, in an sich bekannter Weise hergestellt werden.

Die Variation des Restes $R^1$ am Imidstickstoff ist auf verschiedene Weisen möglich. Beispielsweise ist es, wie oben beschrieben, möglich, von Monomeren auszugehen, die bereits den gewünschten Rest $R^1$ enthalten.

Es ist auch möglich, in den hier aufgeführten Co- bzw. Terpolymeren die Maleinimidkomponente nachträglich zu modifizieren.

Dies kann beispielsweise durch Deprotonierung des Imids (falls $R^1$ = H) mit einer geeigneten Base und anschließende Umsetzung mit einem Acylhalogenid erfolgen. Diese Art der Umsetzung ist an sich bekannt und z. B. in Organikum, 15. Aufl., S. 257, VEB Dt. Vlg. d. Wissenschaften, Berlin 1981 beschrieben.

Bei der Umsetzung des deprotonierten Imids mit Acylhalogeniden kann es, insbesondere unter den Bedingungen zur Herstellung der Orientierungsschicht, zu Umlagerungsreaktionen kommen, so daß die Struktur der erfindungsgemäßen Verbindung in der fertigen Flüssigkristallzelle nicht unbedingt identisch mit dem Primärprodukt der obigen Reaktion ist.

Die Modifikation der Imidkomponente kann weiterhin unter den Bedingungen der Mitsunobureaktion erfolgen (O. Mitsunobu, Synthesis 1981, 1).

Dabei wird ein erfindungsgemäßes Maleinimid-Copolymer in Gegenwart stöchiometrischer Mengen von Triphenylphosphan und Azodicarbonsäurediethylester mit einem Alkohol unter Wasserabspaltung umgesetzt. Bei Verwendung optisch aktiver Alkohole bleibt die Chiralität bei der Umsetzung erhalten, so daß auf diese Weise chiral modifizierte Orientierungsschichten erhalten werden.

Es ist auch möglich, in den hier aufgeführten Co- oder Terpolymeren die beanspruchten Maleinimid-Komponente nachträglich einzufügen, indem man von einem Co- oder Terpolymer ausgeht, das an Stelle von Maleinimid ein Maleinsäureanhydrid enthält. Dieses Polymer kann dann in einem zweiten Schritt in bekannter Weise (Houben-Weyl, Bd. 8/S.657, G. Thieme Verlag, 1952) durch Umsatz mit Ammoniak oder primären Aminen ($R_1$-$NH_2$) unter Entfernung des dabei freiwerdenden Wassers in die hier beanspruchten Maleinimid Copolymeren überführt werden. Es ist in diesem Fall nicht nötig, eine vollständige Überführung der Maleinsäureanhydrid-Einheiten in Maleinimid-Einheiten zu erreichen, da ein Restgehalt an Maleinsäureanhydrid im Polymer nicht stört. Es ist jedoch vorteilhaft, mindestens 30 %, vorzugsweise 50 % der Anhydridgruppen umzusetzen.

Weiterhin ist es möglich, von einem handelsüblichen Copolymeren auszugehen, welches nur aus Maleinsäureanhydrid und Verbindungen der Formel II besteht, und nach erfolgtem Aufbringen die so erhaltene Orientierungsschicht nur an der Oberfläche durch Reaktion mit einem primären Amin in Maleinimid-Einheiten zu überführen. Hierbei können zur Imidisierung auch, vorzugsweise längerkettige und/oder endständige, Diamine eingesetzt werden, welche zu Vernetzungen oder loop-Bildung führen.

Weiterhin können chirale Verbindungen, z. B. Aminosäureester, verwendet werden, wobei auch bei dieser Verfahrensweise die Chiralität erhalten bleibt. Derartige chirale Orientierungsschichten ermöglichen einen besonders hohen Ordnungsgrad. Werden zur Oberflächenmodifikation Amine verwendet, die mindestens eine weitere Aminogruppe und eine Carbon-, Sulfon- oder Phosphonsäuregruppen enthalten und daher Zwitterionen bilden, gelangt man zu ionisch modifizierten Orientierungsschichten. Beispiele für solche Verbindungen sind Lysin, Arginin, $\alpha$-$\beta$-Diaminobuttersäure, Ornithin, Hydroxylysin und/oder Citrullin.

Alle aufgeführten Mono-, Di- oder Polyaminoverbindungen können einzeln oder in Mischung eingesetzt werden.

Erfindungsgemäß können Homopolymere, die nur aus Maleinimideinheiten der Formel I mit identischem $R^1$ bestehen, oder Co- und höhere Polymere aus Maleinimideinheiten der Formel I mit unterschiedlichem $R^1$ oder aus Maleinimideinheiten der Formel I und Einheiten abgeleitet aus polymerisierbaren ethylenisch ungesättigten Verbindungen der allgemeinen Formel II, die vorangehend beschrieben wurden, eingesetzt werden.

Die Erfindung betrifft ferner ein amphiphilisiertes Polymer, enthaltend Maleinimideinheiten der Formel I, und dessen Verwendung als Orientierungsschicht in Flüssigkristalldisplays, bevorzugt in ferroelektrischen Flüssigkristalldisplays.

Amphiphilisierte Polymere werden hergestellt durch Aufbringen oder Anknüpfen per Kovalenzverbindung beispielsweise von Verbindungen vom Typ der Koronanden, Kryptanden oder Podanden. Das amphiphilisierte Polymer kann als Orientierungsschicht eingesetzt werden und führt zu einem deutlich erhöhten Kontrast in FLC-Displays und zu einer größeren Helligkeit des Bildes.

Die amphiphilisierend wirkenden Substanzen können sowohl chemisch an die Orientierungsschicht gebunden sein als auch lediglich als stark oder schwach physisorbierte Schicht aufgetragen werden.

Die die Amphiphilie der Orientierungsschicht bewirkende Komponente im Display kann somit als zusätzliche Schicht zwischen Orientierungsschicht und FLC-Schicht aufgebracht sein, sie kann jedoch auch als eine einfache Mischungskomponente dem Material der Orientierungsschicht zugesetzt werden. Eine weitere Möglichkeit besteht darin, daß die Substanz durch chemische Reaktion an das Material der Orientierungsschicht angekoppelt wird.

Die wirksame Zwischenschicht kann beispielsweise aus einer Lösung geeigneter Verbindungen in Aceton, Toluol, Cyclohexanon, Isopropanol, N-Methylpyrrolidion, Dioxan o.ä. durch Druck-, Tauch-, Sprüh-, Schleuderverfahren und dergleichen aufgebracht werden. Geeignet sind ferner Verfahren der Vakuumdeposition, wie einfaches Aufdampfen oder auch reaktive Aufdampfverfahren (z. B. "chemical vapor deposition (CVD)").

Die wirksame Zwischenschicht kann dabei während verschiedener Schritten im FLC-Display-Produktionsprozeß aufgebracht werden, z. B. direkt nach dem Härten bzw. Trocknen der Orientierungsschicht, vor dem Reibeschritt oder unmittelbar vor dem Verkleben der Zelle. Die Substanzen oder Substanzgemische können ebenfalls auf den Naßfilm der Orientierungsschicht aufgetragen werden und mit der Orientierungsschicht gleichzeitig gehärtet, d. h. erhitzt werden.

Vorteilhaft ist es auch, die wirksamen Substanzen oder Substanzgemische in die zur Erzeugung der Orientierungsschicht erstellte Polymer- oder Polymervorstufenlösung einzumischen und dann gemeinsam mit letzterer in einem Schritt aufzutragen.

Die wirksamen Verbindungen können prinzipiell sowohl monomere, oligomere oder auch polymere Verbindungen sein. Sie haben im allgemeinen einen mittel bis stark lipophilen Charakter mit geringer Polarität, oder zeichnen sich dadurch aus, daß die Verbindung getrennt lokalisierte Bereiche höherer und niedriger Polarität/Hydrophilie besitzt. Cyclische Verbindungen können auch eine Exo-Sphäre mit eher lipophilen und eine Endo-Sphäre mit eher hydrophiler Natur aufweisen.

Weiterhin ist es bevorzugt, in LC-Displays, die die erfindungsgemäße Orientierungsschicht enthalten, zur Vermeidung von Kurzschlüssen Isolationsschichten zu verwenden, wobei die Schichtabfolge

(1) Glas,
(2) ITO-Elektrode,
(3) Isolationsschicht,
(4) Orientierungsschicht, gegebenenfalls mit Zusatzstoff eingemischt oder an der Oberfläche chemisch oder physikalisch angebunden,

auftritt. Zur Unterdrückung des "Surface Memory Effects" sollte die elektrische Kapazität der Isolations- und Orientierungsschicht möglichst hoch sein (vgl. hierzu C. Escher, H.-R. Dübal, T. Harada, G. Illian, M. Murakami und D. Ohlendorf, 2nd Int., Symp. on FLC, Göteborg 1989, Ferroelectrics 113 (1991) 26[9]).

Für eine genügende Isolationsfähigkeit sollte die Dicke der Isolationsschicht mindestens 50 bis 100 nm betragen. Um bei dieser Schichtdicke noch genügend hohe Kapazitäten zu erreichen, müssen Isolationsschichten mit hoher Dielektrizitätskonstante, wie $Ta_2O_5$ und $TiO_2$, verwendet werden (siehe auch JP-A 61 170 726, JP-A 61 078 235, Y. Inabe, K. Katagiri, H. Inone, J. Kanbe, S. Yoshihara und S. Iijima, Ferroelectrics (1988), 85, S. 255 bis 264).

Als Verbindungen, die die Orientierungsschicht amphiphilisieren, sind insbesondere geeignet makrocyclische Verbindungen, Kryptanden, Koronanden, Podanden, Mercaptoverbindungen und ionophore Verbindungen.

Erfindungsgemäß einzusetzende makrocyclische Verbindungen sind in der EP-A-0 451 822 beschrieben und werden hier durch die allgemeine Formel VI wiedergegeben.

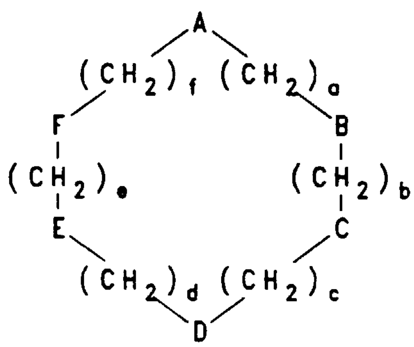

VI

wobei

| | |
|---|---|
| a, b, c, d, e f | unabhängig voneinander eine ganze Zahl von Null bis 4 ist, wobei $a + b + c + d + e + f \geq 7$ ist, und |
| -A-, -B-, -C-, -D-, -E-, -F- | gleich oder verschieden |

$-CH_2-$, -CHR'-, -CHOCH-, -CR=CR'-, -C≡C-,

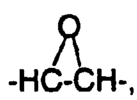

-CO-, -COO-, -O-CO-O-, -CONH-, -CONR'-, -NR'-

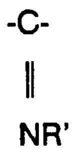 , 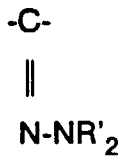 , 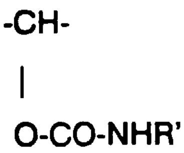 , 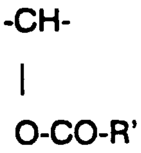 , 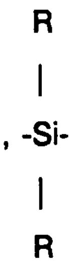 ,

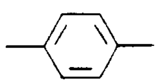 , 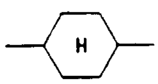 , 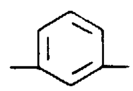 , 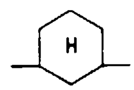 , 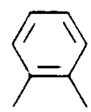 , 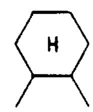

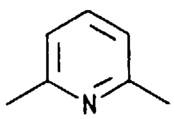 , 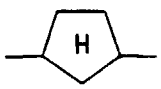 , 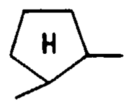 , 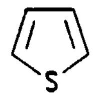 , 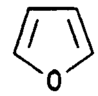

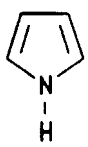 oder 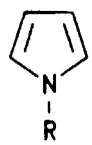

sind, wobei

R Alkyl mit 1 bis 12 C-Atomen und

R' Alkyl mit 1 bis 12 C-Atomen, wobei eine $-CH_2$-Gruppe durch -O-, -COO- ersetzt sein kann, Phenyl oder Cl, F oder CN bedeuten kann.

Kryptanden und Koronanden, wie in der deutschen Offenlegungsschrift 4 011 803 genannt, sind ebenfalls besonders als amphiphilisierende Verbindungen geeignet.

Zur Klassifizierung der genannten Komplexliganden sei auf E. Weber und F. Vögtle, Inorganica Chimica Acta, Bd. 45, (1989) L65-L67 verwiesen. Die dort aufgeführten Ligandentopologien sind im folgenden wiedergegeben:

| offenkettig | cyclisch | sphärisch |
| --- | --- | --- |

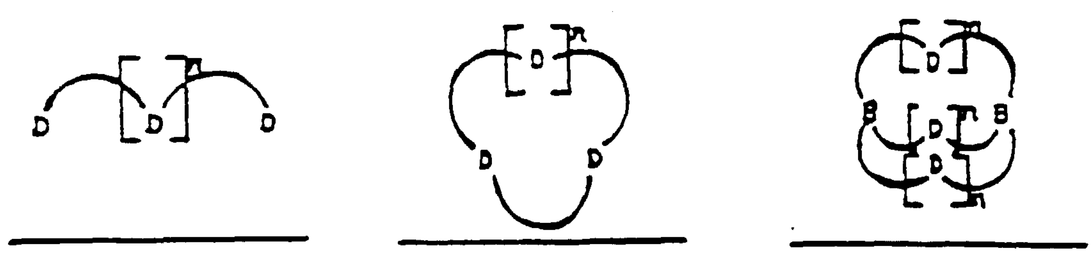

| Podand | Koronand | Kryptand |
| --- | --- | --- |
| D : Donor | D = O : Kronenether | B : Brückenkopfatom |

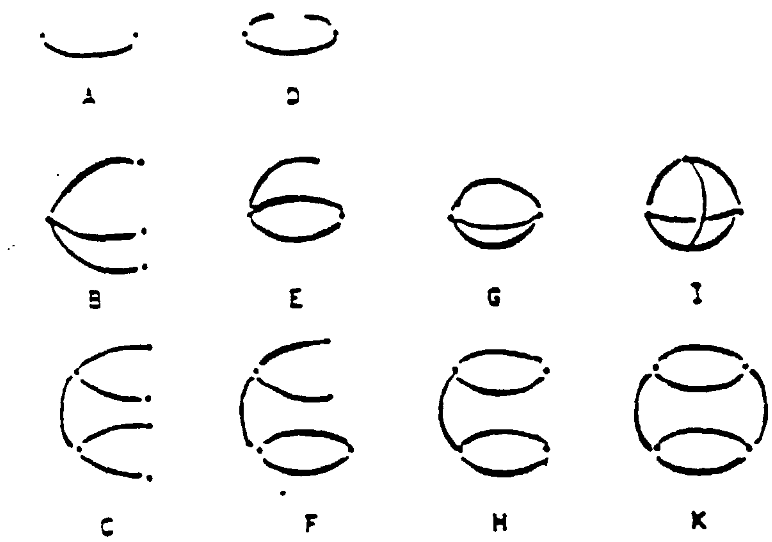


A-C: acyclisch (Podanden); D-F; monocyclisch (Koronanden);
G-H: bicyclisch (Koronanden, Kryptanden); I-K: tricyclisch (Kryptanden)

Einzusetzende Kryptanden oder Koronanden können mit der allgemeinen Formel VII oder VIII dargestellt werden.

$$\begin{array}{lcl} CH_2(\text{-}CH_2\text{-}Z\text{-}CH_2)_m\text{-}CH_2 \\ | \qquad\qquad\qquad\qquad | \\ X^1 \qquad\qquad\qquad\quad X^2 \\ | \qquad\qquad\qquad\qquad | \\ CH_2(\text{-}CH_2\text{-}Z\text{-}CH_2)_n\text{-}CH_2 \end{array} \qquad VII$$

wobei

Z für -O- oder -S- steht,
m, n ganze Zahlen größer Null bedeuten wobei
m+n = 2 bis 6 ist,
$-X^1-$, $-X^2-$ gleich oder verschieden

-Z-, -NR-,

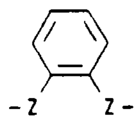 , 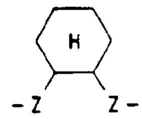

oder

$-X^1-$, $-X^2-$ zusammen

$$> N-CH_2(-CH_2-Z-CH_2)_t-CH_2-N <$$

oder

$$> N-CO(-CH_2-Z-CH_2)_t-CO-N <$$

sind,
wobei

-R Alkyl oder Alkanoyl mit 1 bis 15 C-Atomen, -Phenyl, -Benzyl oder -Benzoyl und
t 1 oder 2 bedeuten;

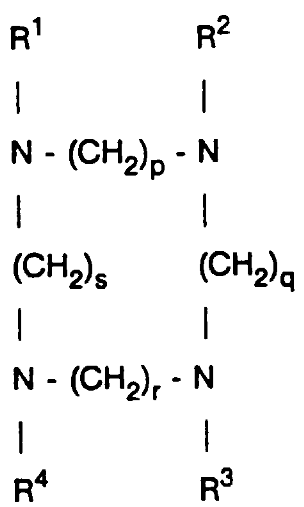

VIII

wobei $-R^1$, $-R^2$, $-R^3$ und $-R^4$ unabhängig voneinander

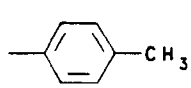 , 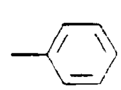

-H, $-CH_3$,

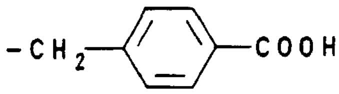

oder

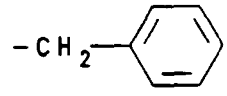

bedeuten und p, q, r, s unabhängig voneinander eine ganze Zahl von 2 bis 4, wobei p+q+r+s = 8 bis 16, ist.

Bevorzugte Koronanden sind:

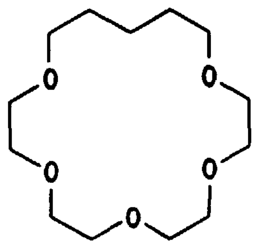

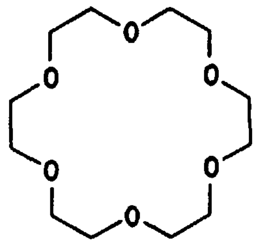

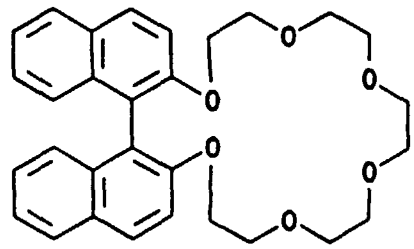

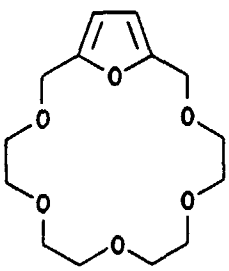

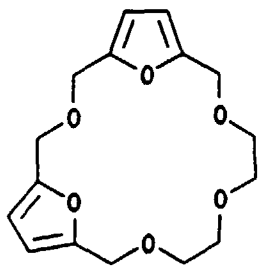

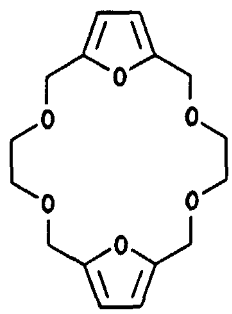

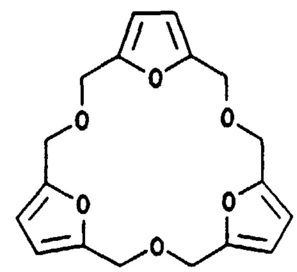

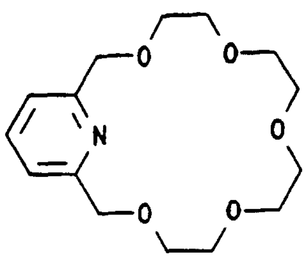

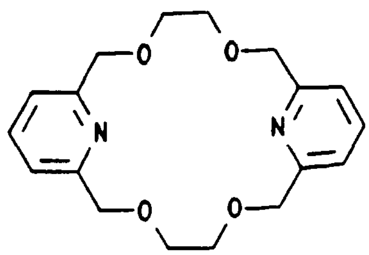

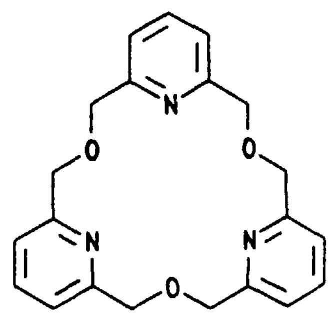

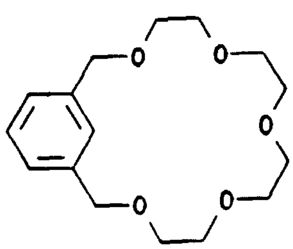

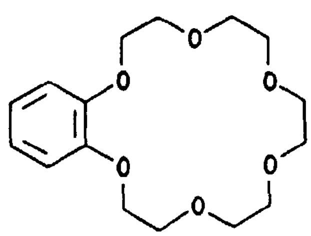

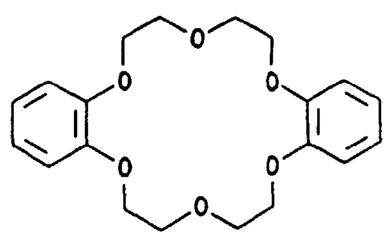

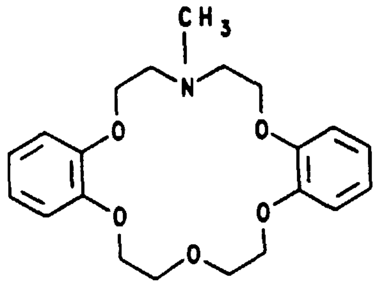

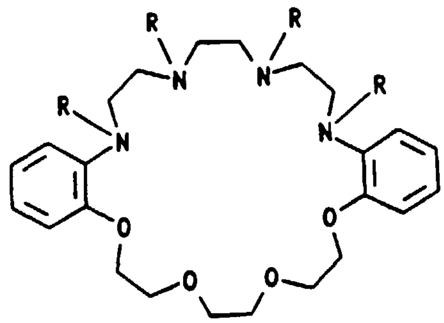

R = Alkyl

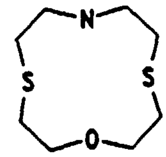

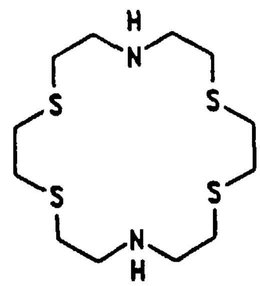

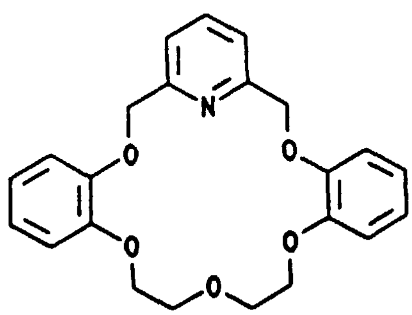

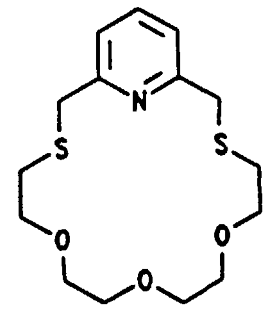

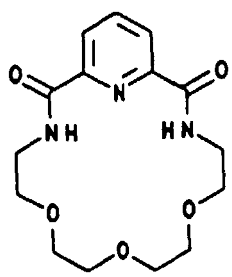

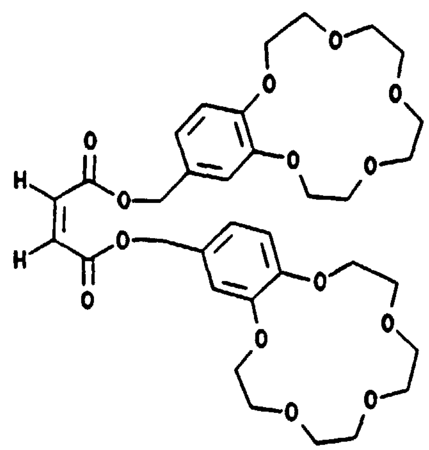

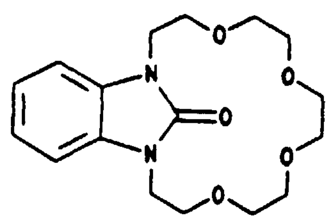

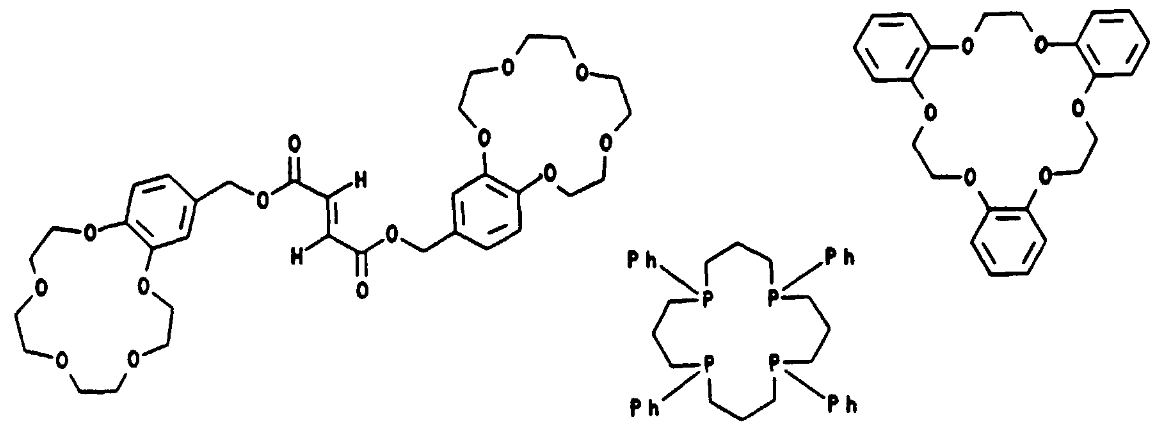

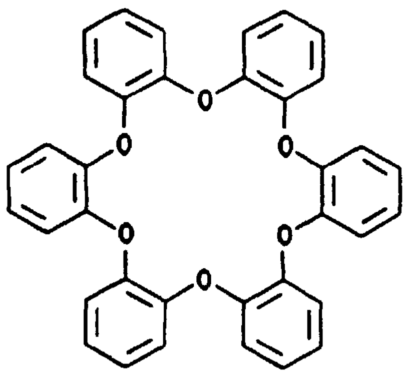

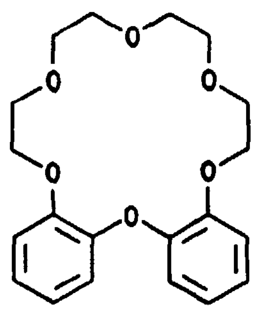

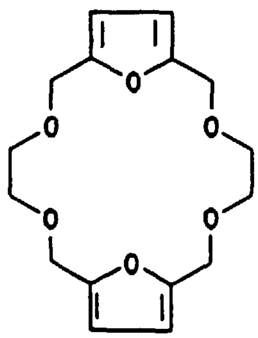

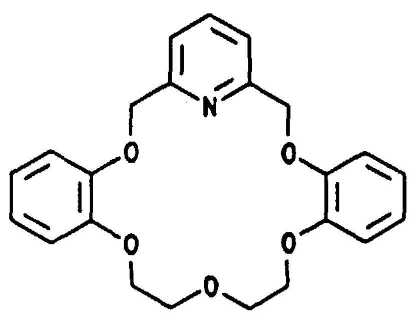

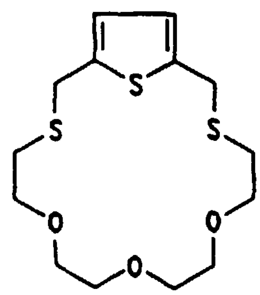

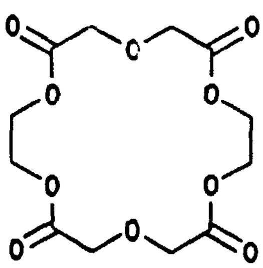

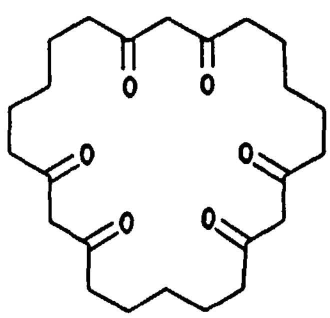

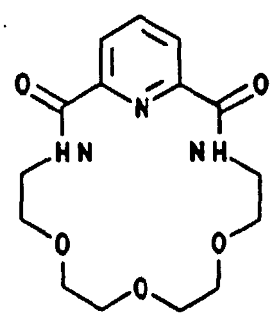

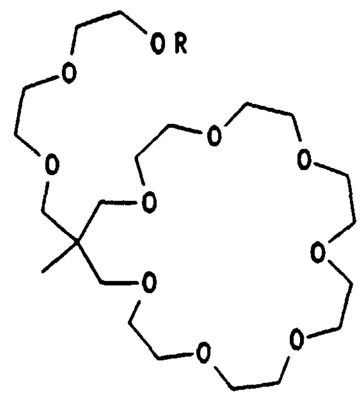

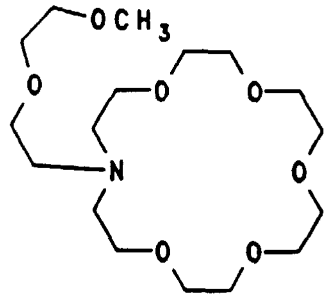

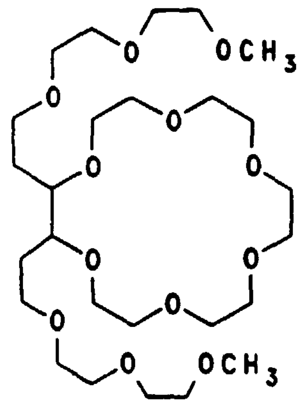

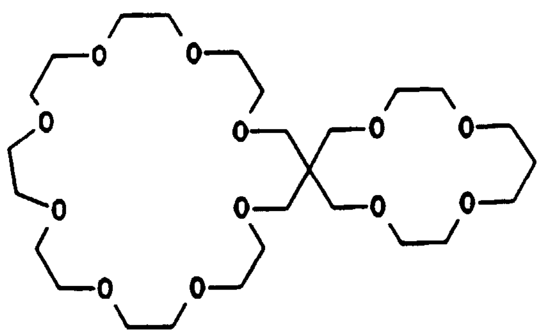

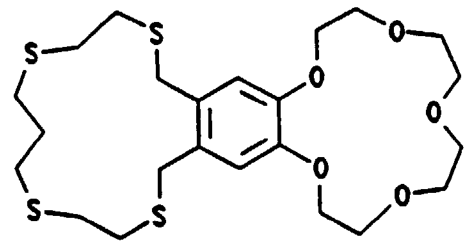

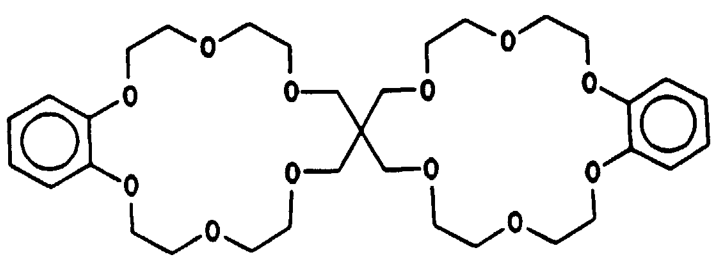

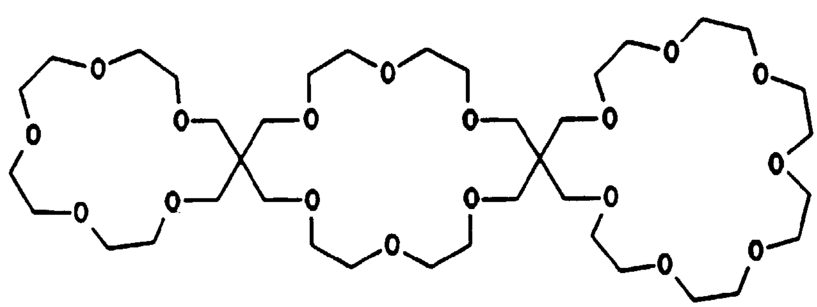

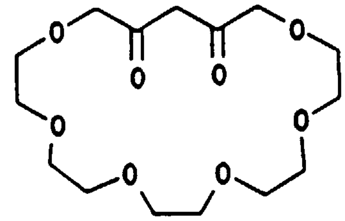

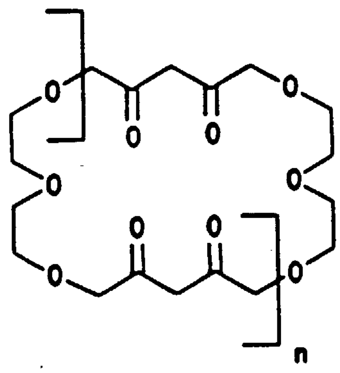

n = 1

n = 2

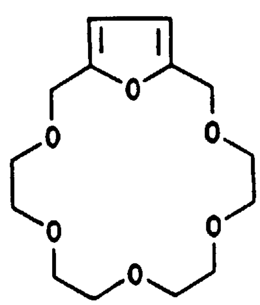

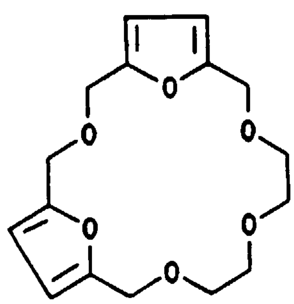

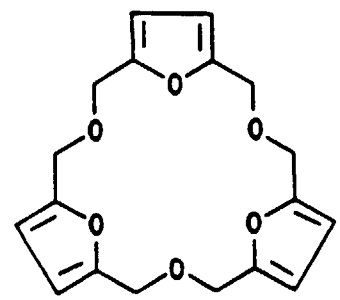

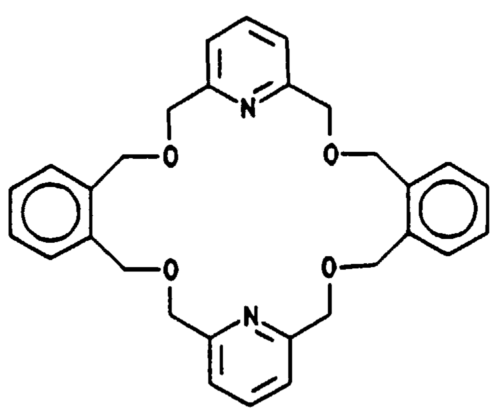

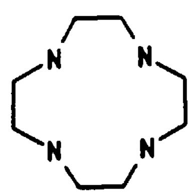

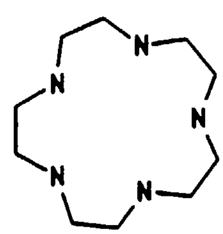

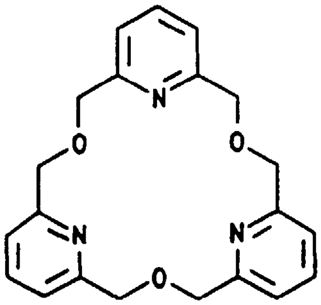

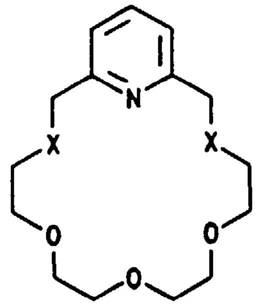

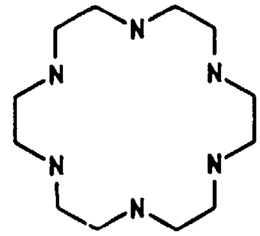

X = O

X = S

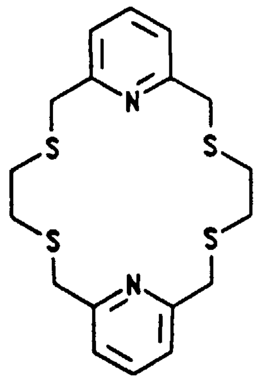

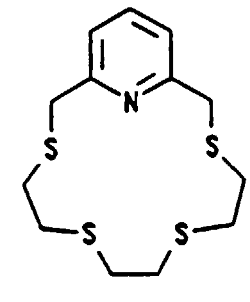

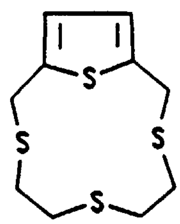

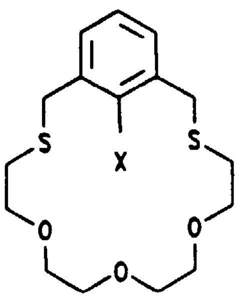

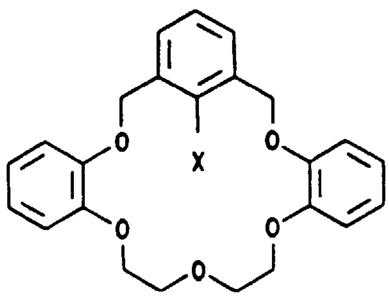

| | |
|---|---|
| X = H | $COOCH_3$ |
| $OCH_3$ | F |
| $SCH_3$ | Cl |
| $NO_2$ | |
| CN | |
| $C_6H_5$ | |

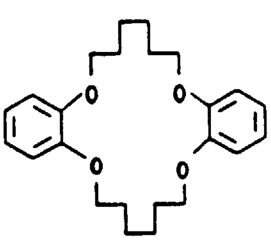

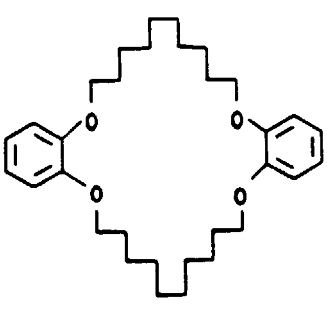

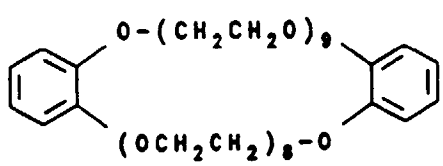

30

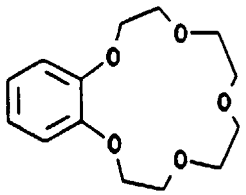

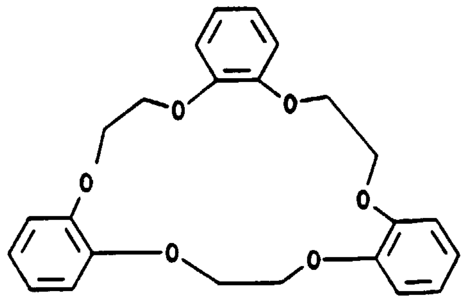

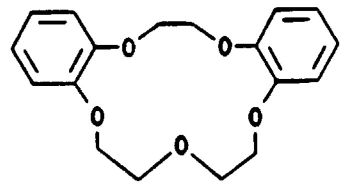

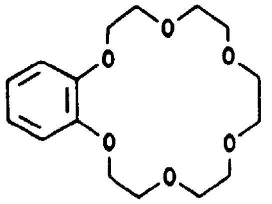

22

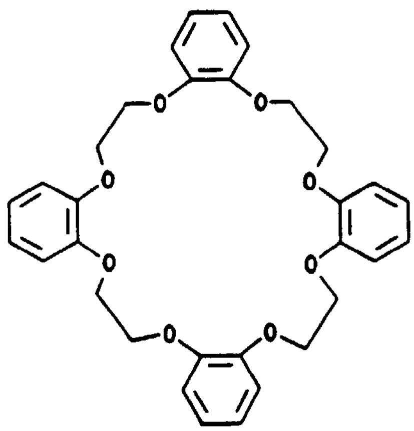

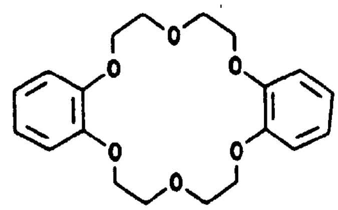

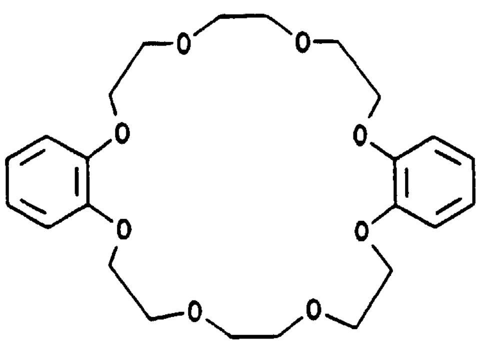

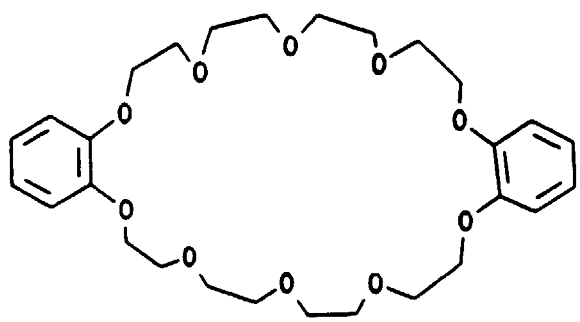

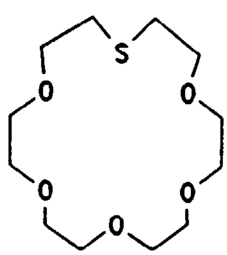

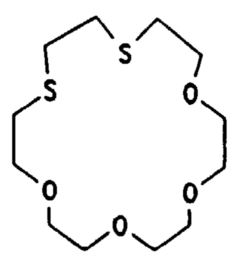

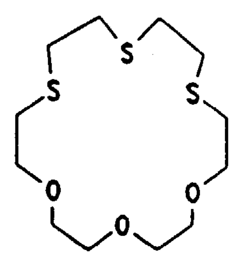

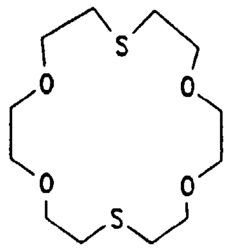
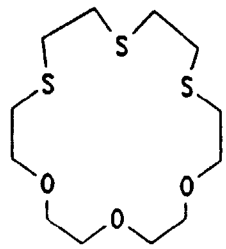
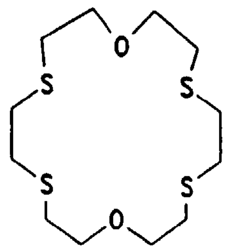
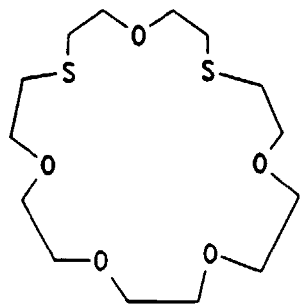

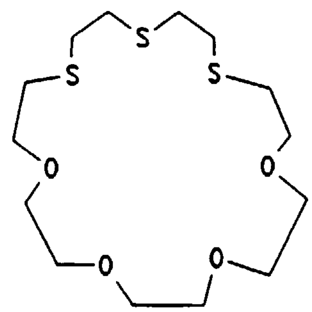
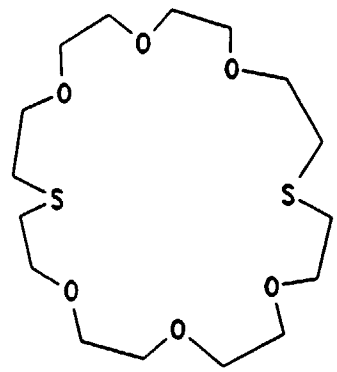
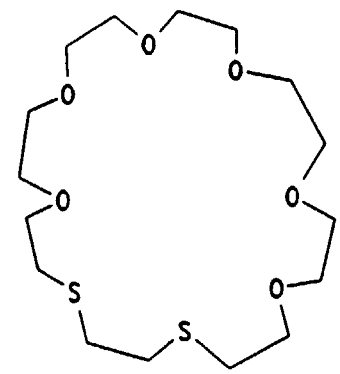

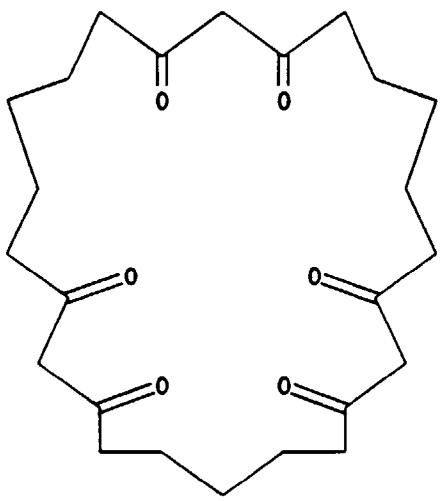
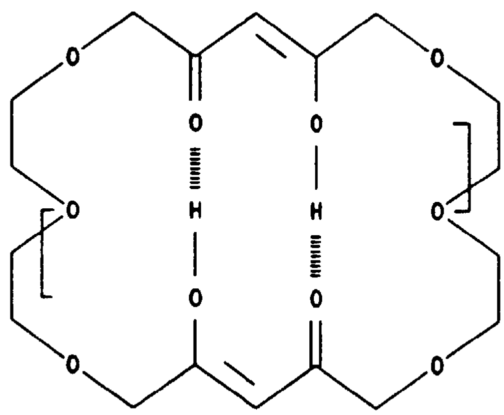
n = 1.2

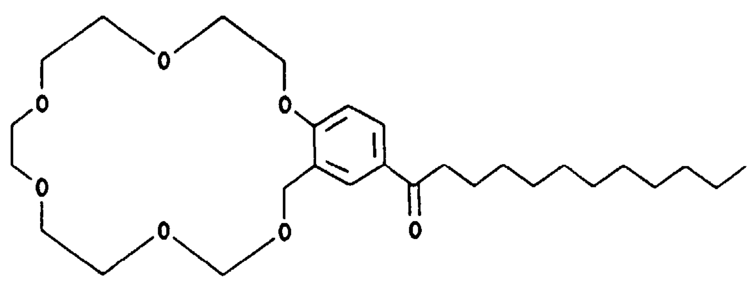

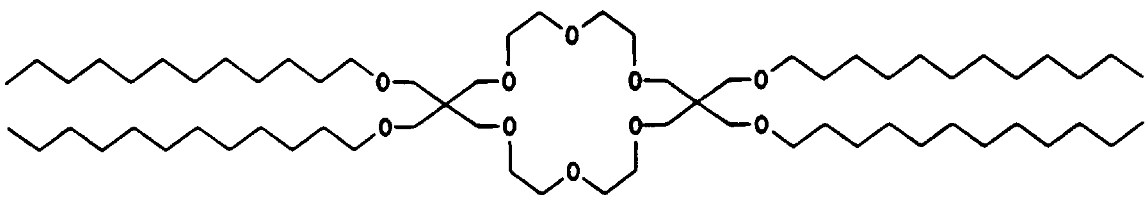

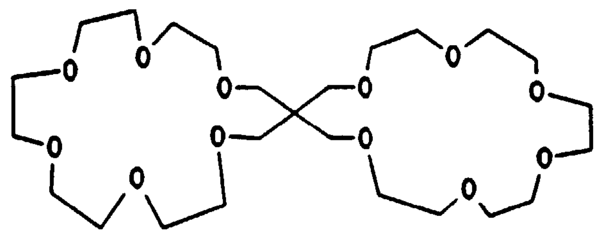

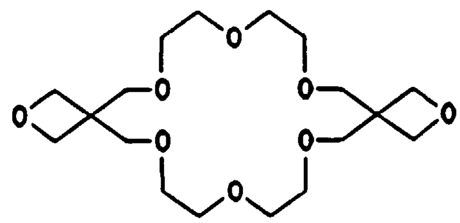

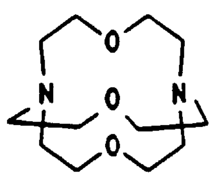

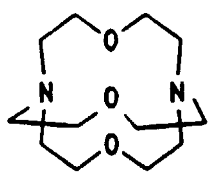

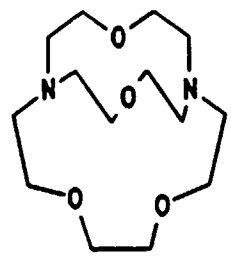

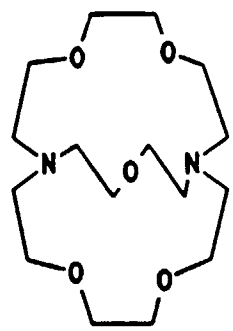

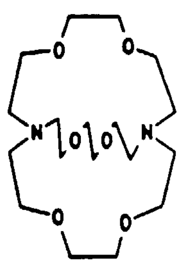

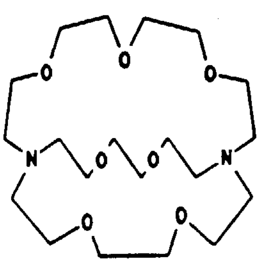

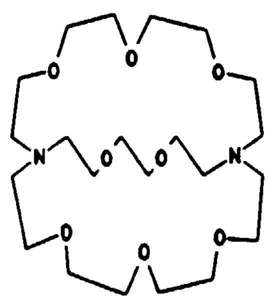

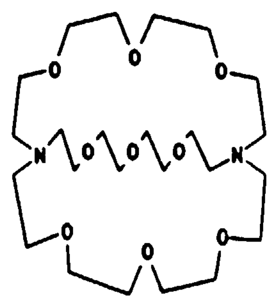

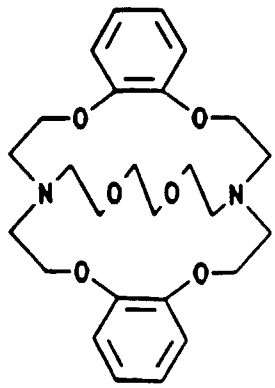

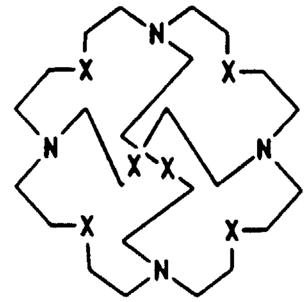

X = O

X = $(CH_2)_8$

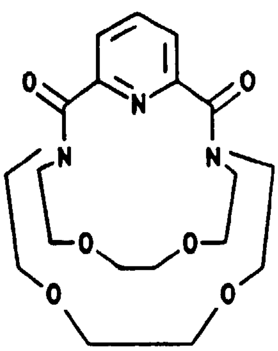

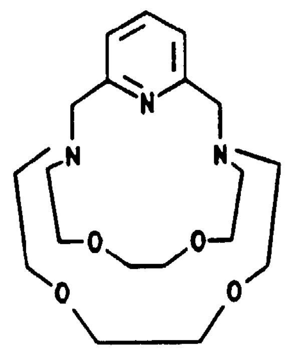

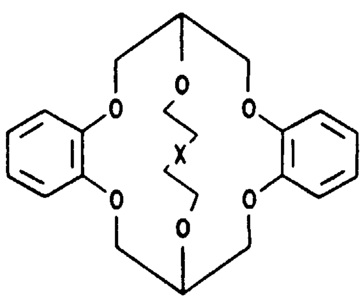

X = $OCH_2CH_2O$

X = $(OCH_2CH_2)_8O$

X = 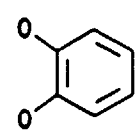

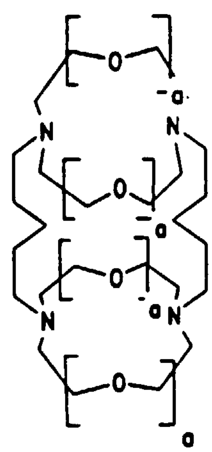

X = O; n = 1

X = O; n = 2

X = NH; n = 2

X = $CH_2$; n = 2

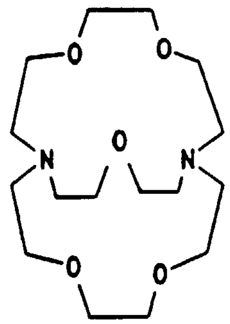

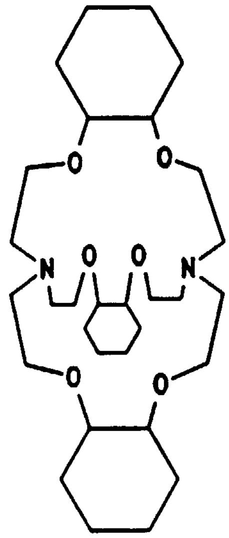

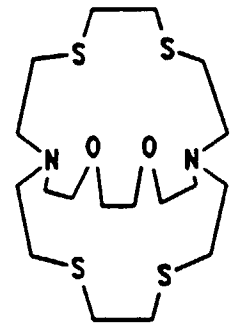

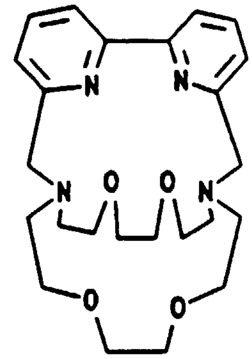

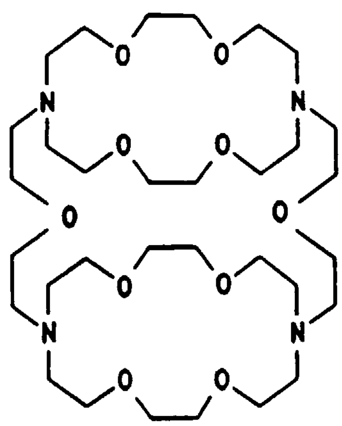

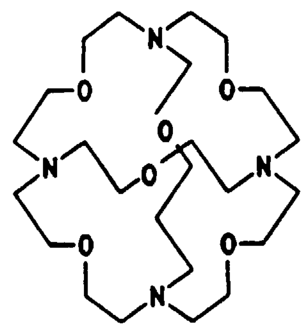

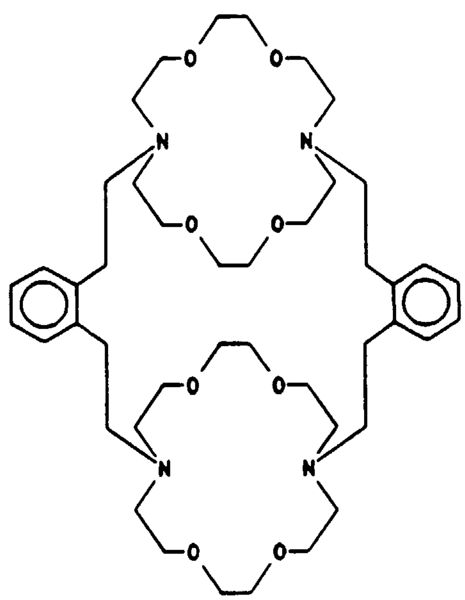

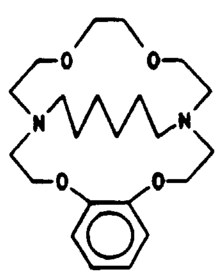

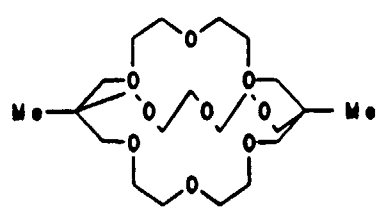

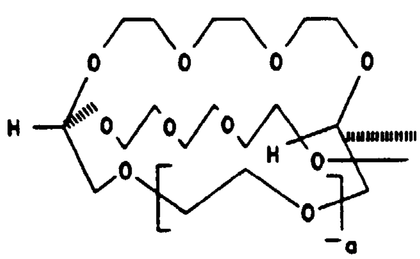

n = 2

n = 3

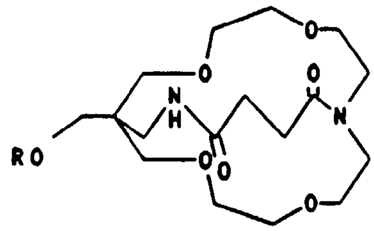

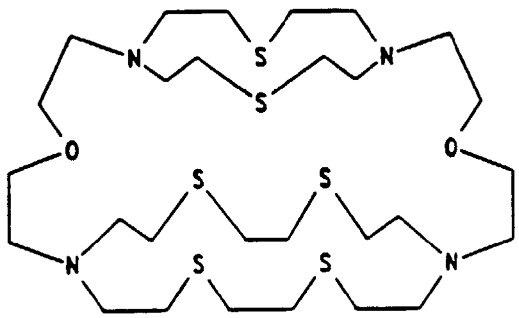

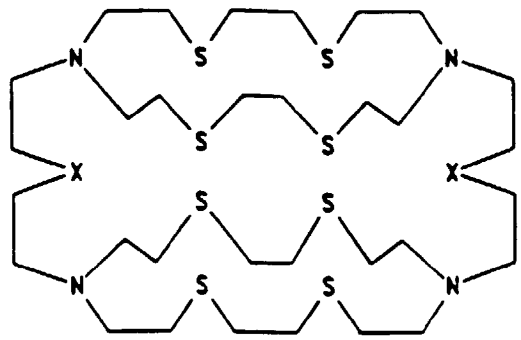

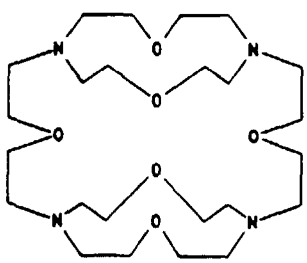

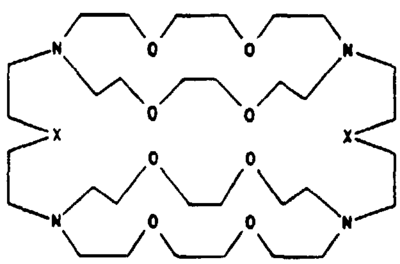

X = O

X = $CH_2$

X = o-Phenylen

X = NH

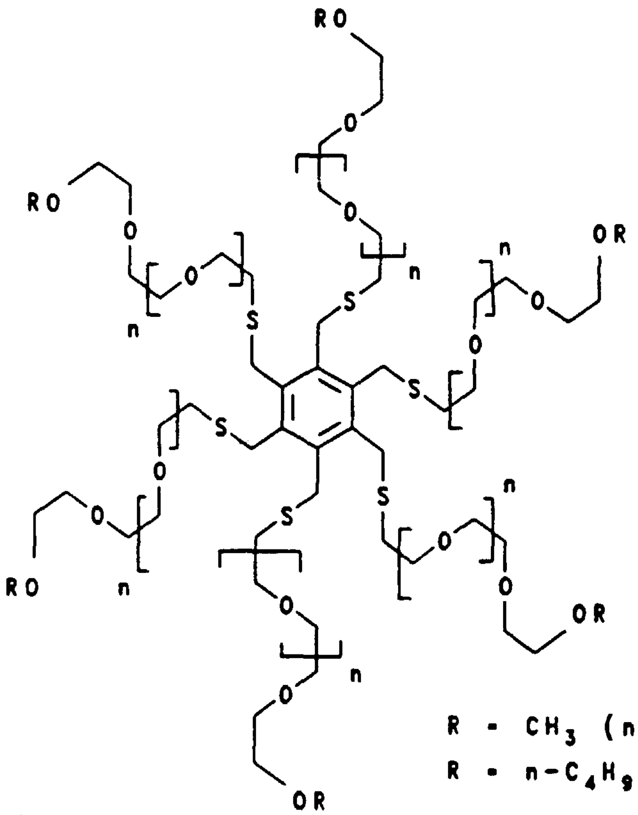

R = $CH_3$ (n = 0)

R = n-$C_4H_9$ (n = 1)

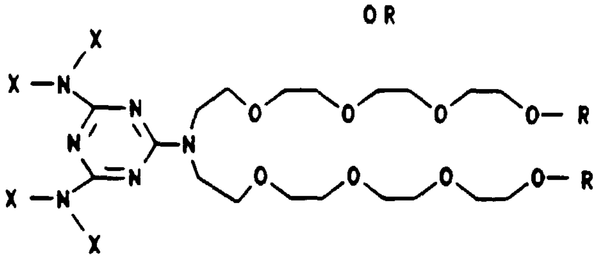

: R = n-$C_4H_9$

: R = n-$C_8H_{17}$

X :

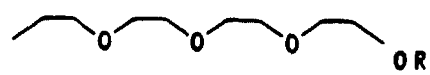

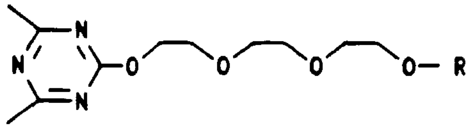

: R = H

: R = $CH_2CH_2OH$

R = n-$C_8H_{17}$

R = $CH_2CH_2O$-n-$C_8H_{17}$

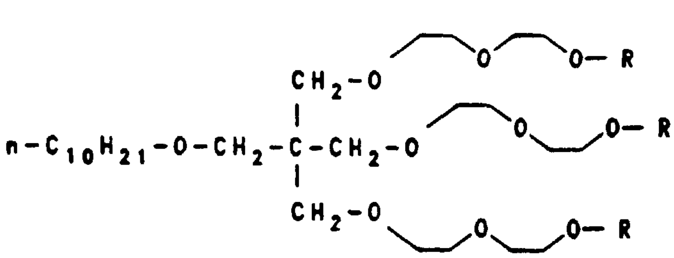

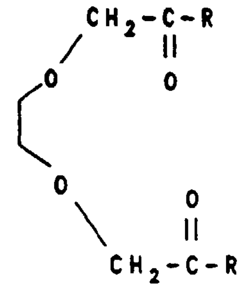

R = $N(C_8H_5)_2$
$NH(CH_2)_{10}COOC_2H_5$
u. a.
(N = 1,2)

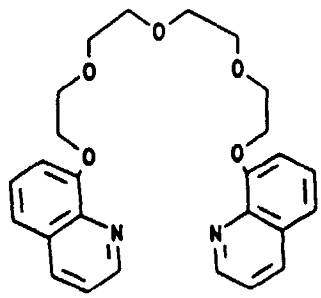

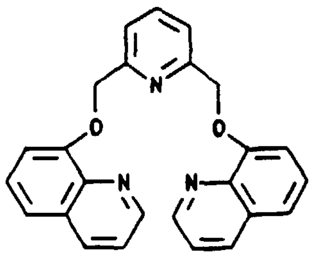

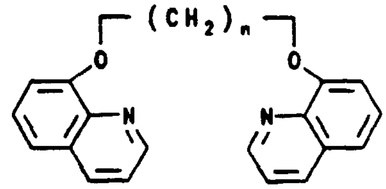

(n = 8,10)

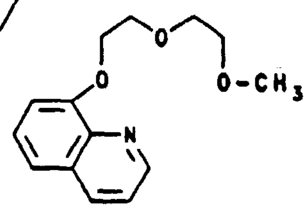

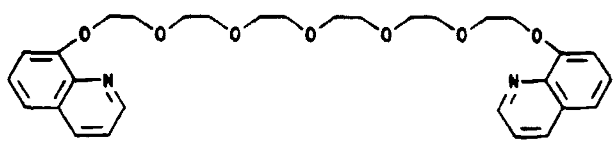

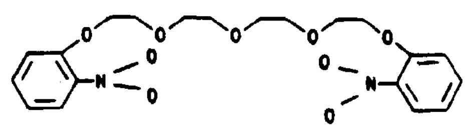

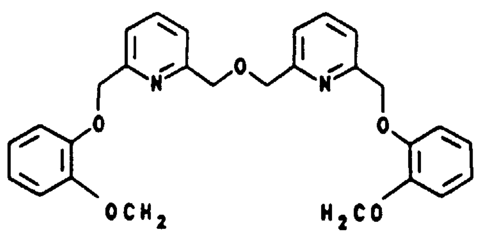

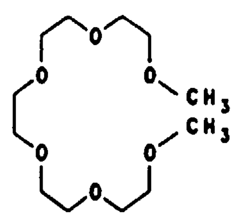

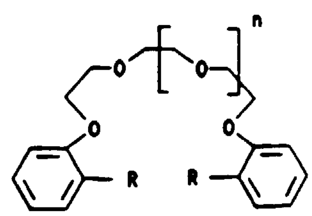

n = 0 - 2
R = H, $OCH_3$, $NO_2$, COOH, COOEt, CONHR, NHCOR

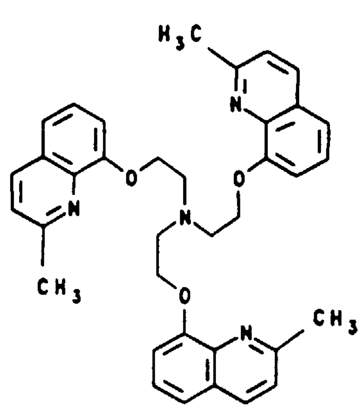

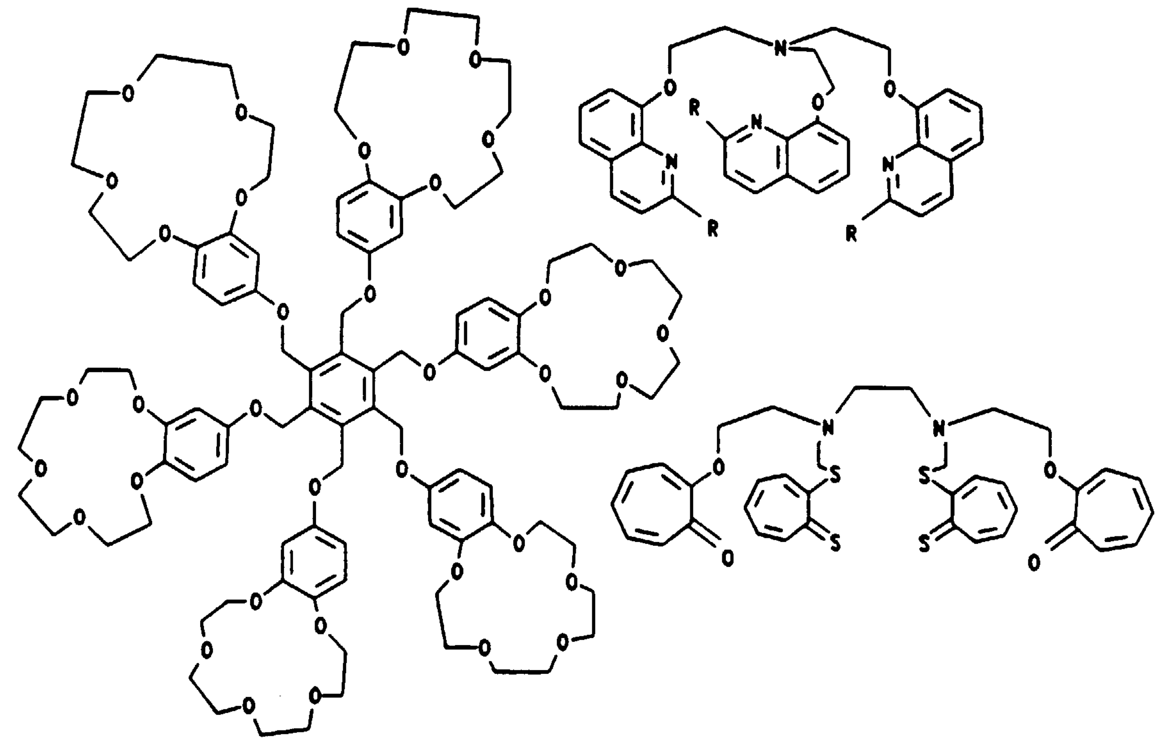

Erfindungsgemäß einzusetzende Mercaptoverbindungen sind in der folgenden Formel IX dargestellt

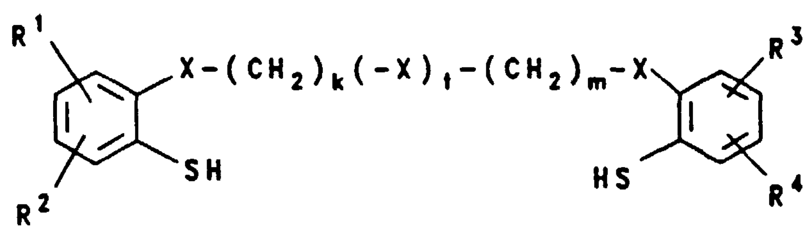

IX

wobei

| | |
|---|---|
| $R^1$, $R^2$, $R^3$, $R^4$ | unabhängig voneinander ein H-Atom, Alkyl mit 1 bis 8 C-Atomen, Alkyloxy mit 1 bis 8 C-Atomen, |
| -X- | -O-, -S- oder -NH-, |
| k, m | unabhängig voneinander 1, 2 oder 3 und |
| t | Null oder 1 bedeuten. |

Auch ionophore Verbindungen, wie sie in der EP-A-0 451 821 vorgestellt werden, sind besonders geeignet, um den Kontrast im Display durch Amphiphilisierung der Orientierungsschicht zu steigern. Die Ionophore werden dabei durch die allgemeine Formel X näher definiert:

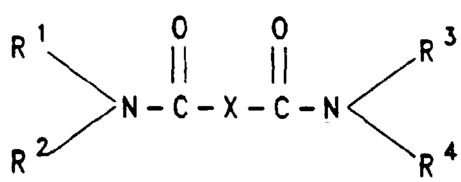

X

wobei

$R^1$, $R^2$, $R^3$, $R^4$ unabhängig voneinander Alkyl mit 1 bis 15 C-Atomen, bei dem eine $-CH_2$-Gruppe durch -COO- oder -CO- oder einer nicht direkt an das N-Atom gebundene $CH_2$-Gruppe durch -O- ersetzt sein kann, Cyclohexyl, Phenyl oder Benzyl bedeuten und

X ein Alkylen mit 2 bis 9 C-Atomen ist, bei dem ein oder zwei nicht benachbarte $-CH_2$-Gruppen durch -O- ersetzt sein können, bei dem zwei benachbarte $CH_2$-Gruppen durch 1,2-Phenylen oder 1,2-Cyclohexylen ersetzt sein können, bei dem zwei benachbarte $CH_2$-Gruppen durch $-CH(CH_3)-CH(CH_3)-$ ersetzt sein können und bei dem ein H-Atom einer $CH_2$-Gruppe durch $R^5$ oder $R^6$ substituiert sein kann, wobei $R^5$ Alkyl mit 1 bis 15 C-Atomen, $R^6$ Alkyl mit 1 bis 15 C-Atomen oder $-CH_2-O-CH_2-CO-NR^1R^2$ bedeuten.

Ganz allgemein gibt es für die genannten Verbindungen beispielsweise folgende Arten der Ankopplung an die bzw. in der Orientierungsschicht:

I Chemische Ankopplung - d. h. die amphiphilisierende Verbindung wird bevorzugt über Kovalenz-Bindungen an/in der Orientierungsschicht gebunden. Die anzubindende Verbindung hat die allgemeine Formel

$$C_y - G - R_g.$$

Dabei bedeuten:

$C_y$ eine der vorgenannten amphiphilisierenden Verbindungen;

G eine geradkettige oder verzweigte Alkyleneinheit mit 0 bis 18 C-Atomen, bei der auch eine oder mehrere $-CH_2$-Gruppen ersetzt sein können durch -O-, -S-,

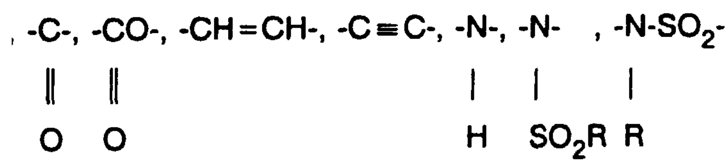

$-Si(CH_3)_2-$,

Cycloalkandiyl, Arendiyl oder Heteroarendiyl, wobei auch ein oder mehrere H-Atome der $CH_2$-Gruppen durch F ersetzt sein können;

$R_g$ eine Reaktivgruppe (kuppelnde Funktionalität), z. B. -OH, $-CO_2H$, $-CO_2R$, $-NH_2$, -NHR', -SH, -C-R',

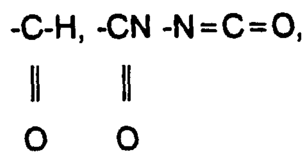

-N=C=S,

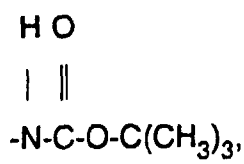

$-CH=CH_2$, $-Si(CH_3)_2Cl$, $-Si(CH_3)_2OR'$, $-Si(OR)_3$, $-N_3$, Halogenid, $-N{\equiv}C$, $-SO_2CH=CH_2$

Bevorzugt werden Verbindungen, in denen $C_y$ die eingangs beschriebenen Makrocyclen, Kryptanden oder Koronanden darstellt.

Ganz besonders bevorzugt werden Verbindungen, in denen $C_y$ die folgende Bedeutung hat:

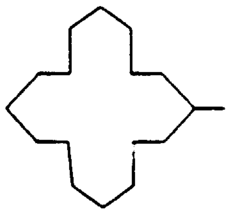 , 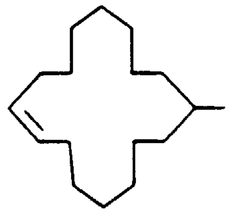 , 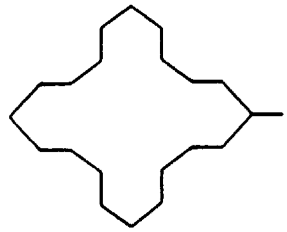 , 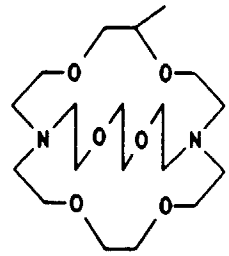 ,

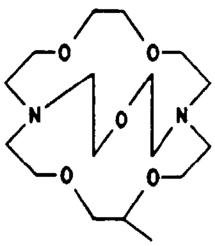 , 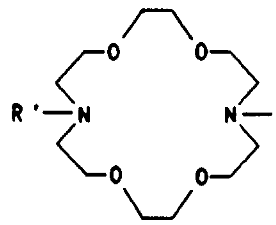 , 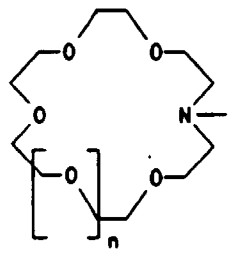 , 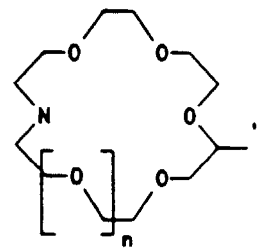 ,

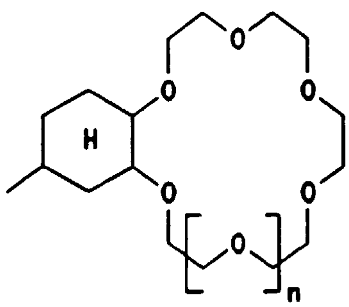 , 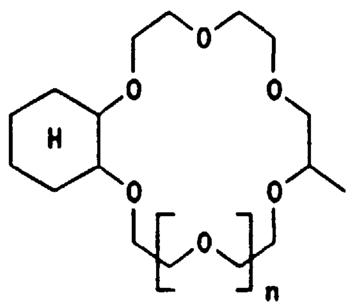 ,

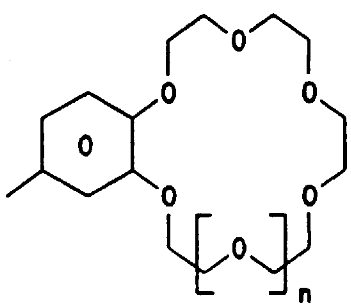 , 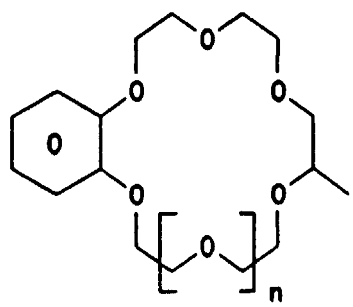 ,

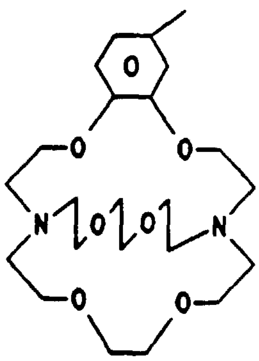
,
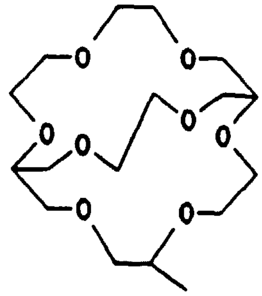
,
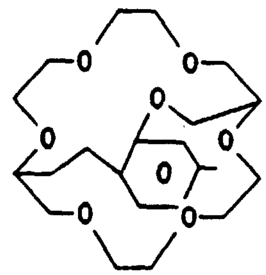

n: 0, 1 oder 2

Im höchsten Maße bevorzugt sind Verbindungen, in denen bedeuten:

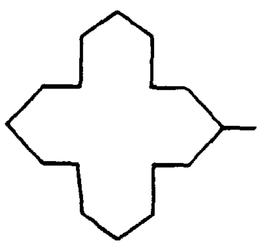
,
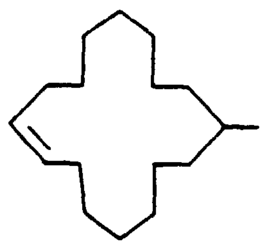
,
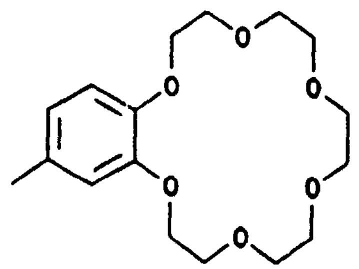
,

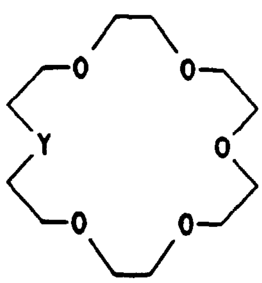
,
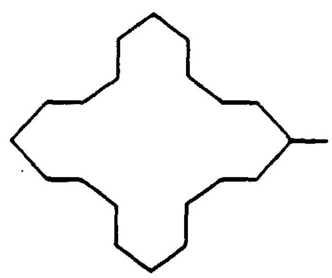

G $-O-(CH_2)_m-$, $-(CH_2)_m-$

Y -O- oder N-Alkyl oder N-Aryl

$R_g$ $-CO_2R'$, -N=C=O, $-Si(CH_3)_2OR'$, $-NH_2$, -OH

II Physisorption

Die amphiphilisierenden Verbindungen werden durch schwächere oder stärkere intermolekulare Anziehungskräfte an die Oberfläche der Orientierungsschichtmoleküle angelagert. Die Stärke der Ankopplung an die Oberfläche kann durch die Einbindung polarer oder polarisierbarer Gruppen in die amphiphilisierenden Verbindungen erhöht werden.

Die positive Wirkung der amphiphilisierenden Verbindungen auf die Orientierungsschicht wird wesentlich verstärkt durch die Flüssigkristallmischungen, die ebenfalls diese Verbindungen, insbesondere Koronanden und Kryptanden, enthalten.

Die erfindungsgemäß behandelte Orientierungsschicht in Displays bewirkt insbesondere eine Unterdrückung von Twist-Zuständen und Geisterbildern und somit eine Verbesserung des optischen Kontrasts.

Ferner kann mit Hilfe der amphiphilisierten Orientierungsschicht eine schockstabile Flüssigkristall-Schalt- und Anzeigevorrichtung hergestellt werden. Durch Zugabe der erfindungsgemäß einzusetzenden Verbindungen, insbesondere Koronanden und Kryptanden, zu Orientierungsschichten können die FLC-Mischungen durch Anlegen einer kontinuierlichen periodischen elektrischen Spannung in eine einheitliche und twistfreie "bookshelf" oder "quasi bookshelf"-Orientierung gebracht werden (Erläuterung der Begriffe: Dübal et al., Proc. 6th Intl. Sympf. o. Electrets, Oxford, England

(1988); Y. Sato et al. Jap. J. Appl. Phys. 28 L 483 (1989)).

Es hat sich außerdem gezeigt, daß die die beschriebenen Maleinimideinheiten enthaltenden Polymere vorteilhaft als Orientierungsschicht in Flüssigkristalldisplays eingesetzt werden können, die bei hohen Temperaturen, vorzugsweise von 30 bis 70°C, insbesondere von 40 bis 60°C, wie sie z. B. bei Projektionsanwendungen auftreten, betrieben werden können.

Schockgeschädigte Flüssigkristalldisplays können bei Verwendung der amphiphilisierenden Substanzen in Orientierungsschichten durch Anlegen einer kontinuierlichen, periodischen Spannung wieder regeneriert werden, wie es auch schon in der EP-A 0 451 820 bei Verwendung dieser Substanzen in FLC-Mischungen vorgeschlagen wurde.

Die Erfindung wird durch die Beispiele näher erläutert.

Beispiele

a) Synthesebeispiele

Beispiel 1

Herstellung von Maleinimid-Styrol Copolymer aus Maleinimid und Styrol

52 g Styrol und 48,5 g Maleinimid, die kommerziell erhältlich sind, werden in 350 ml Cyclohexanon gelöst und unter einem Stickstoffstrom auf 80°C erwärmt. Nach Zugabe von 0,5 g AIBN wird weitere 4 h bei 80° gerührt. Die entstehende Masse wird mit Cyclohexanon verdünnt und durch einen Druckfilter filtriert. Das Polymer, dessen Molekulargewicht zwischen 10 000 und 40 000 ($M_w$, bestimmt durch GPC) liegt, wird durch Zugabe von Methanol ausgefällt. Ausbeute: 96 %.

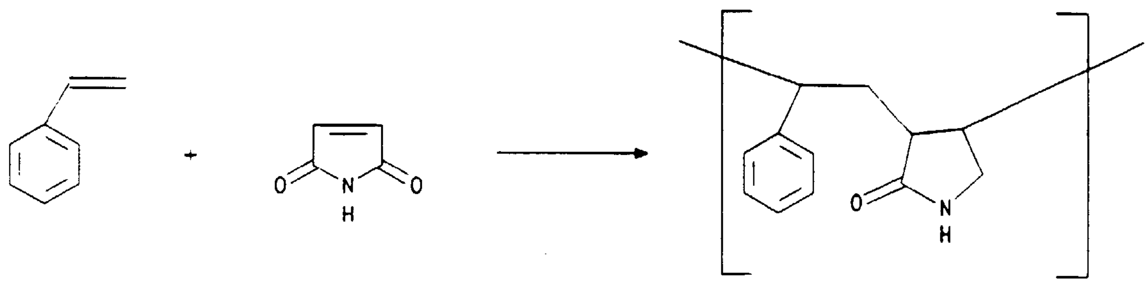

In analoger Weise werden die Polymere P2-P6 dargestellt.

Beispiel 2

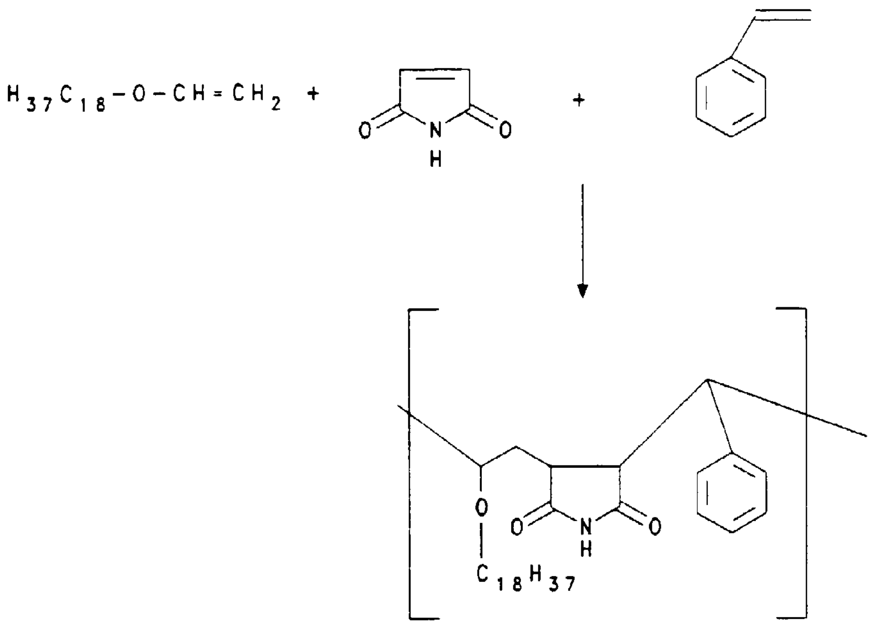

(0,5 : 1 : 0,5)

(P2)

Beispiel 3

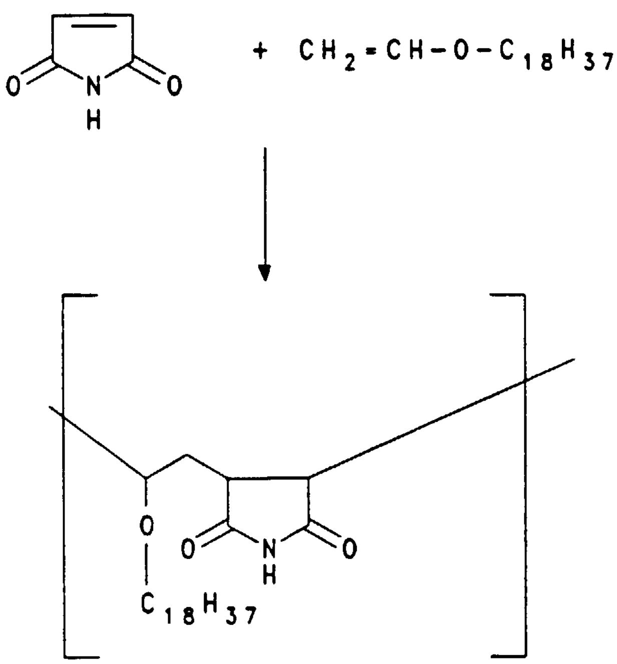

(1 : 1)

(P3)

Beispiel 4

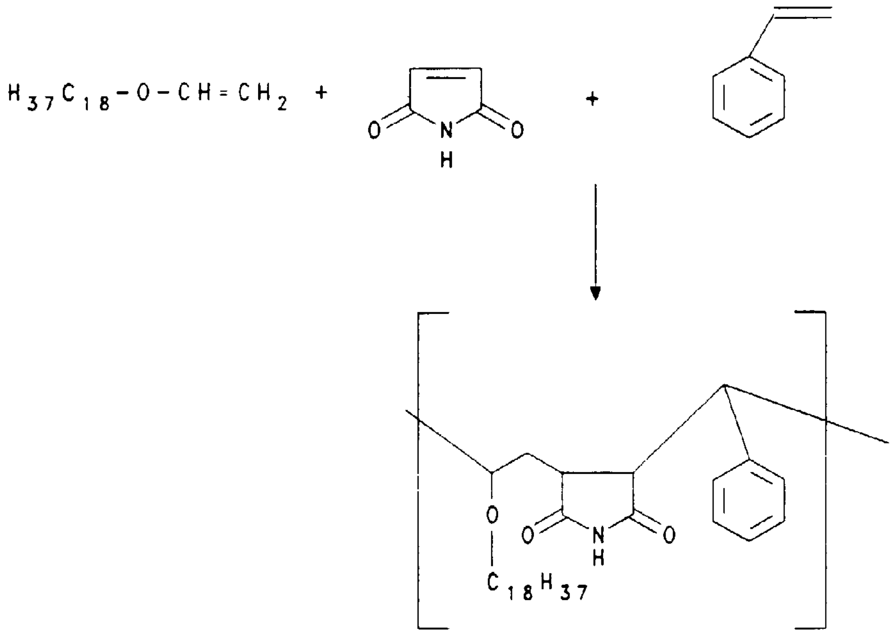

(0,2 : 1 : 0,8)

(P4)

Beispiel 5

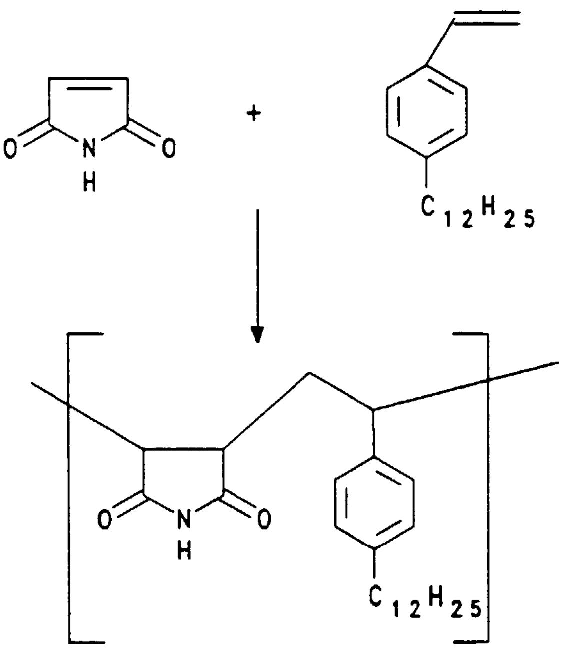

(1 : 1)

(P5)

Beispiel 6

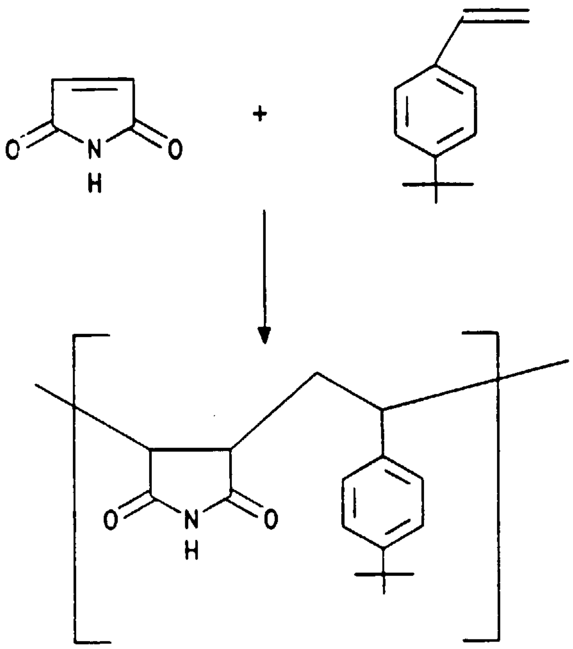

(1 : 1)

(P6)

Beispiel 7

Herstellung von Maleinimid-Styrol Copolymer aus Maleinsäureanhydrid-Styrol Copolymer

3,0 g Maleinsäureanhydrid-Styrol Copolymer, Styrolgehalt 50 %, $\bar{M}_w$: 350 000, wird mit 40 ml 25 gew.-%igem wäßrigen $NH_3$ im Schüttelautoklaven 18 Stunden auf 150 °C erhitzt; es stellt sich ein Druck von 16 bar ein.
Nach Abkühlen liegt der größte Teil des Polymers in einer opaken Lösung vor. Der Austrag wird am Rotationsverdampfer zunächst bei Normaldruck, anschließend im Vakuum eingeengt. Die Lösung neigt stark zum Schäumen. Der zurückbleibende Kolbeninhalt wird entnommen, im Vakuum bei 80°C getrocknet, zerkleinert und bis zur Gewichtskonstanz weiter getrocknet. Man erhält 2,8 g eines hellen Pulvers; die Elementaranalyse ergibt 6,0 % N, berechnet 6,9 % N. Im Infrarotspektrum (DMSO) findet man eine breite Carbonyl-Imid-Bande bei 1630-1700 $cm^{-1}$.

Beispiel 8

Copolymer N-Hexylmaleinimid-Styrol

5 g Maleinsäureanhydrid-Styrol Copolymer mit 50 Mol-% Styrolgehalt $\bar{M}_w$ 350 000, wird mit 2,5 g Hexylamin (≙ 3,3 ml) in 100 ml Toluol 18 Stunden zum Rückfluß erhitzt, wobei das Toluol über eine aufgesetzte, mit $CaCl_2$ als Trockenmittel gefüllten Soxleth-Apparatur abläuft und so trocken gehalten wird.
Am Rotationsverdampfer wird das Toluol im Vakuum abdestilliert, anschließend der Kolbeninhalt im Hochvakuum von evtl. noch vorliegenden Resten von Hexylamin befreit. Der Rückstand wird im Vakuum über $H_2SO_4$ konz. getrocknet. Man erhält etwa 7 g Polymer mit einem N-Gehalt von 4,5 %, berechnet 4,8 %. Im Infrarotspektrum findet man eine C=O-Bande bei 1650-1700 $cm^{-1}$.

Analog den im Beispiel 1 und 2 angegebenen Verfahren werden weitere Amine mit einem Copolymer aus Maleinsäureanhydrid und Styrol umgesetzt. Da zur Umsetzung Temperaturen über 110°, besser >150° nötig sind, muß bei niedriger siedenden Aminen im Druckgefäß erhitzt werden (Beispiel 7). Bei höher siedenden Aminen kann in Toluol unter Rückfluß gearbeitet werden, wobei das bei der Reaktion freiwerdende Wasser, beispielsweise wie in Beispiel 8 angegeben, entfernt wird.
In der nachfolgenden Tabelle A sind Amine als Reaktanden aufgeführt, die nach den Methoden der Beispiele 7 oder 8 mit dem oben angegebenen Copolymer ($\bar{M}_w$ 350 000, 50 Mol-% Styrol) in Toluol umgesetzt werden. Ferner ist Reaktionstemperatur und -dauer sowie der durch Elementaranalyse ermittelte Stickstoff-Gehalt angegeben, ggf. auch der Fluorgehalt. Die Aufarbeitung erfolgt durch Abfiltrieren des in der Kälte ausgefallenen Polymer-Produkts über eine Nutsche, Auswaschen des Niederschlages mit Methanol und Trocknung des Niederschlages im Vakuum 48 Stunden

über $H_2SO_4$ konz. bis zur Gewichtskonstanz.

Der Umsatz zur N-Alkyl-Imid-Verbindung kann im IR durch das Verschwinden der Anhydrid-Banden bei 1810/1750 $cm^{-1}$ und Erscheinen der Imid-Carbonylbande bei 1700 $cm^{-1}$ verfolgt werden.

Tabelle A:

| Beispiel Nr. | Amin | Mol.-Verhältnis bzg. auf Maleinsäure-anhydrid | Methode | Temp. °C | Reaktions-dauer h | Ausbeute % |
|---|---|---|---|---|---|---|
| 9 | $CH_3NH_2$ | 1:1 | Bsp. 7 | 150° | 18 | >90 |
| 10 | $(CH_3)_3C-NH_2$ | 1:1 | " | " | " | " |
| 11 | $n-C_{12}H_{25}-NH_2$ | 1:1 | Bsp. 8 | 110 | " | " |
| 12 | $n-C_{18}H_{37}NH_2$ | 1:2 | " | " | " | " |
| 13 | $n-C_{18}H_{37}NH_2$ | 1:1 | " | 180 | " | " |
| 14 | 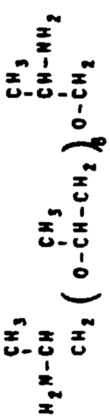 | 2 : 5 | " | 110 | " | " |
| 15 | $HO-CH_2-CH_2-O-CH_2CH_2-NH_2$ | 1:1 | " | " | " | " |

| Beispiel Nr. | Amin | Mol.-Verhältnis bzg. auf Maleinsäure-anhydrid | Methode | Temp. °C | Reaktions-dauer h | Ausbeute % |
|---|---|---|---|---|---|---|
| 16 | 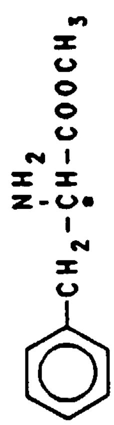 Phenylalanin-Methylester | 1:1 | Beisp.8 | 110 | 18 | >90 |
| 17 | $C_8F_{17}$-$C_2H_{21}$-O-$C_3H_6$-NH2 | 1:1 | " | " | " | " |

Beispiel 18

N-Perfluoroctylsäure-maleinimid-Styrol-Copolymer

2,0 g Maleinimid-Styrol-Copolymer werden unter Rückfluß in 150 ml THF gelöst. Unter Schutzgas und Rühren werden 0,3 g 80 % NaH portionsweise zugegeben und 30 Minuten bei 70° nachgerührt. Die so hergestellte Na-Imid-Verbindung wird mit 2,25 ml (≙ 4,32 g) Perfluoroctansäurechlorid umgesetzt, wobei anfangs starkes Schäumen auftritt.

Der Ansatz wird 4 Stunden auf 70° gehalten. Nach Abkühlen auf Raumtemperatur setzt sich ein Niederschlag ab, der abgesaugt und mit Methanol gewaschen wird. Nach Trocknung im Hochvakuum erhält man 3,8 g eines weißen Polymers. Dieses hat nach Elementaranalyse einen Fluor-Gehalt von 30,8 % gegenüber berechneten 47,7 % F bei vollständigem Umsatz, d. h., es ist ca. 2/3 des Imid-Stickstoffs mit Perfluoroctylsäure belegt.

Beispiel 19:

N-(2-Propionsäurebutylester)-Maleinimid-Styrol-Copolymer

2 g Maleinimid-Styrol-Copolymer werden in 25 ml DMF gelöst, mit 3 g Triphenylphosphan und 1,8 ml Azodicarbonsäureethylester versetzt und 15 Minuten gerührt, wobei leichte Erwärmung eintritt. Dann werden 1,5 ml L(-)Butyllactat zugesetzt und 20 Stunden bei Raumtemperatur gerührt. Man erhält eine klare, rotbraune Lösung, die in 300 ml Methanol gegeben wird. Man erhält eine milchigweiße Fällung des Polymers. Da die Substanz von klebriger Konsistenz ist, wird sie durch Zentrifugieren abgetrennt. Nach nochmaligem Auswaschen mit Methanol und Zentrifugieren wird im Trockenschrank bei 70°C getrocknet. Ausbeute 2,5 g. Das Polymer zeigt in DMF-Lösung einen Drehwert von $[\alpha]_D^{20} = +6,7°$.

Beispiel 20

Modifikation einer Maleinsäureanhydrid-Styrol-Copolymer-Orientierungsschicht mit Dodecylamin

Auf 2 für den Zellenbau vorbereitete, mit Indium-Zinn-Oxid (ITO)-Elektoden präparierte Gläser wird, wie oben beschrieben, durch Aufschleudern ein Maleinsäureanhydrid-Styrol Copolymer aufgebracht, das ein $\bar{M}_w$ von 50 000 und 50 Mol-% Styrolgehalt hat. Die Lösung ist 0,5 gew.-%ig in Methoxypropanol. Nach Erhitzen und Fixieren wird auf das Copolymer in einem weiteren Arbeitsgang eine 1 gew.-%ige Lösung von Dodecylamin in Xylol, durch Aufschleudern aufgebracht. Durch nochmaliges 30 minütiges Erhitzen auf 130°C wird das Lysin auf der Orientierungsschicht fixiert. Nach Abkühlen wird 2 x mit Isopropylalkohol gewaschen und anschließend getrocknet. Die so präparierten Gläser werden dann in der später beschriebenen Weise zu Testzellen verklebt.

Besondere Ausführungsformen

In einer besonderen Ausführungsform wird die erfindungsgemäße Orientierungsschicht P1 (Maleinimid-Styrol Copolymer) an der Oberfläche durch einen Zusatzstoff Z1 modifiziert. Z1 verfügt über funktionelle Gruppen, die eine chemische Anbindung an das Polymer P1 ermöglichen.

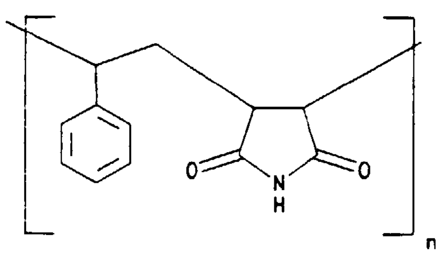

P 1

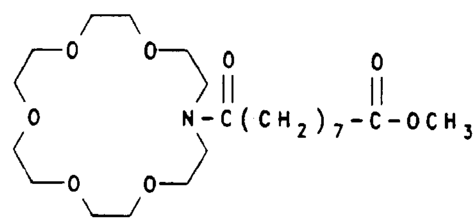

Z 1

Analog dazu läuft die Anbindung des Zusatzstoffs Z1 an die Orientierungsschichten P2 bis P5.

In einer weiteren besonderen Ausführungsform wird die erfindungsgemäße Orientierungsschicht P1 (Maleinimid-Styrol-Copolymer) an der Oberfläche durch einen Zusatzstoff Z2 modifiziert. Z2 verfügt über funktionelle Gruppen, die eine chemische Anbindung an das Polymer ermöglichen.

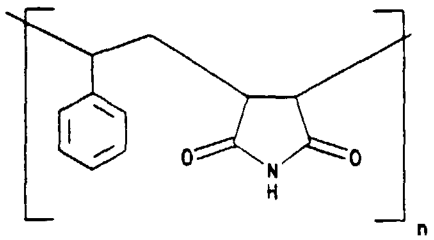

+

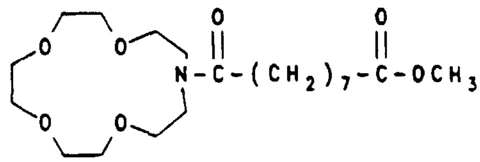

P 1 Z 2

b) Meßbeispiele

Bau von Testzellen

Zum Nachweis der vorteilhaften Eigenschaften der erfindungsgemäßen Orientierungsschichten werden Testzellen hergestellt, die mit ferroelektrischen Flüssigkristallmischungen gefüllt und anschließend geprüft werden.

- Dazu werden Glasplatten, die mit Indium-Zinn-Oxid (ITO) beschichtet sind, geschnitten und photolitographisch so bearbeitet, daß kleine Glassubstrate mit einer ca. 8 x 8 $mm^2$ großen Elektrodenfläche entstehen. Diese Glassubstrate werden dann zunächst in einer wäßrigen Tensidlösung und anschließend zweimal in Milliporewasser (=entmineralisiertes Wasser, das über eine Filteranlage der Fa. Millipore weitgehend von Partikeln befreit wurde.) bei ca. 60° C im Ultraschallbad gereinigt. Nachdem die Glassubstrate mit Heißluft getrocknet sind, werden sie mit einem Naßfilm aus einer 0,5 gew.-%igen Lösung von P1 in Cyclohexanon beschichtet. Die Beschichtung wird mit einem Spincoater durchgeführt, kann aber auch mit anderen, z. B. Druck- oder Tauchverfahren erfolgen. Die Lösung wird auf das Glassubstrat bis zur vollständigen Bedeckung aufgetropft, mit 500 rpm 5 sec. vorgeschleudert und mit 4000 rpm 30 sec. hauptgeschleudert. Der Naßfilm wird 30 min bei 160° C getrocknet. Die zurückbleibende Schichtdicke von P1 beträgt ca. 15 nm. Diese Orientierungsschicht wird dann mit einem samtartigen Stoff auf einer Reibemaschine gerieben (Tischgeschw.: 100 mm/min; Walzendrehzahl: 500 rpm; Stromaufnahme: 0,4/A). Anschließend werden mit dem Spincoater die 1,8 µm Spacer (0,05 gew.-%ige-Lösung in Isopropanol; 20 sec, 200° rpm) aufgebracht. Mit dem Plotter wird der Kleberahmen gedruckt und dann werden die Flüssigkristalltestzellen bei paralleler Reiberichtung unter Verwendung einer Membranpresse verklebt (Kleberkonditionen: Epoxy 304 (5 Teile) + Härter 310 B (1 Teil) (beide Firma E.H.C., Japan) das Gemisch wird dann mit Ethylacetat (4:1) versetzt. Härtetemperaturen: 20 min 60° C/20 min 90° C/40 min 150° C).

Die so erhaltenen Testzellen werden in Hinsicht auf ihre elektrooptischen Kenngrößen mit verschiedenen Flüssigkristallmischungen untersucht.

Bei einer weiteren Ausführungsform wird zusätzlich zu der erfindungsgemäßen Orientierungsschicht P1 eine Zusatz-Schicht Z1 aufgebracht. Hierfür wird eine 0,5 gew.-%ige Lösung von Z1 in 1,4-Dioxan mit 500 rpm/5sec und 3000 rpm/30 sec aufgeschleudert. Dieser Naßfilm wird dann 30 min bei 120° C getrocknet, wodurch eine chemische Fixierung des Zusatzstoffes erreicht wird. Der überschüssige Zusatzstoff wird dann, nach der Trocknung, mit 2-Propanol im Ultraschallbad (1 min) abgewaschen. Nach diesem Schritt erfolgt der Testzellenbau wieder in der oben beschriebenen Weise (Reiben u.s.w.).

Die Orientierungsschichten P2 bis P6 sowie die Zusatzschicht Z2 werden analog verarbeitet.

Zur Charakterisierung der erfindungsgemäßen Orientierungsschichten werden ferroelektrische Flüssigkristallmischungen verwendet. Beurteilt werden: die Orientierung des Flüssigkristalls in der Testzelle, die die erfindungsgemäße Orientierungsschicht enthält; das Schaltverhalten des Flüssigkristalls bei Anlegen von kurzen Ansteuerimpulsen; das Schaltverhalten des Flüssigkristalls bei Anlegen von Ansteuerimpulsfolgen, die den Betrieb eines Matrix-Displays simulieren und der optische Kontrast, der das Verhältnis der Transmissionen des hellen und dunklen Schaltzustands darstellt.

Die erfindungsgemäßen Orientierungsschichten werden sowohl in der eingangs beschriebenen "Chevron"-Textur, als auch in der sogenannten "bookshelf" oder "quasi-book-shelf"-Textur verwendet. Die "bookshelf™-Textur wird ausgehend von der "Chevron"-Textur durch Anlegen einer Rechteckspannung von ca. 10 Hz bei einer Amplitude von ca. 10-15 V/µm induziert. Die Zellen befinden sich im Strahlengang eines Polarisationsmikroskops, an dem zusätzlich eine Photodiode angebracht ist. Die Photodiode ist mit einem Speicheroszilloskop verbunden und ermöglicht die Erfassung der optischen Transmission der Flüssigkristallzelle.

Ein freiprogrammierbarer Funktionsgenerator mit nachfolgenden Spannungsverstärker liefert die für das Schalten

notwendigen Schaltimpulse an die Testzelle. Über eine Computerschnittstelle können dem Funktionsgenerator verschiedene Impulsformen vorgegeben werden.

Eine verwendete Impulsform simuliert an den eingesetzten 1-Pixel-Testzellen den Betrieb in einem Matrixdisplay. Dabei ist das Verhältnis von Zeilen- zu Spalten-Spannung (Datenimpulse) eine wichtige Größe, die als Bias-Verhältnis definiert ist. Dieses Verhältnis sollte möglichst groß sein, da nur bei geringer Datenpulsamplitude ein entsprechend hoher Kontrast möglich wird.

Der Kontrast wird über die Signale der Photodiode ermittelt, als Verhältnis von Hell- und Dunkeltransmission. Dabei kann noch zwischen dem Kontrast der Memoryzustände (ohne Datenpulse) und dem Kontrast im Matrixdisplay (mit Datenpulsen) unterschieden werden, wobei letzterer immer geringere Werte aufweist.

Als weitere wichtige Größe wird der effektive Tiltwinkel zur Charakterisierung der Orientierungsschichten herangezogen. Der doppelte Tiltwinkel ist identisch mit dem Schaltwinkel. Der effektive Tiltwinkel in der "Chevron"-Textur ist kleiner als der Molekültiltwinkel (Neigung der Moleküle bezüglich der Schichtnormalen), als Folge der gewinkelten Lagenstruktur.

Außerdem führt das Auftreten von sogenannten "Twist"-bzw. "Bend"-Zuständen zu einer weiteren Reduktion des effektiven Tiltwinkels. Die dabei zu beobachtende bläuliche Farbe des dunklen Schaltzustands und die geringe Transmission des Hellzustands resultiert in einem geringen Kontrast.

Der effektive Tiltwinkel in der "Bookshelf"-Textur ist deutlich größer, wodurch sich der Hellzustand durch eine größere Helligkeit auszeichnet. Jedoch kann auch hier das Auftreten von "Twist"-Zuständen zu erheblichen Kontrasteinbußen führen. Die eingesetzten Orientierungsschichten sollen die Bildung von "Twist"-Zuständen deshalb weitgehend unterdrücken. Zur Charakterisierung diese Eigenschaften wird der Tiltwinkel in der "Chevron"-Textur herangezogen.

Die eingesetzte FLC-Mischung M1 besitzt folgende Zusammensetzung (in Mol %):

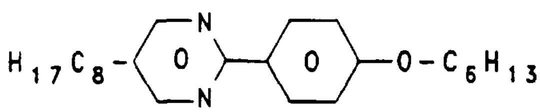 14,58

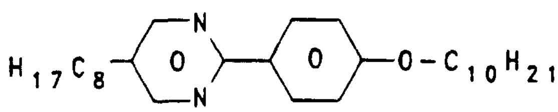 9,72

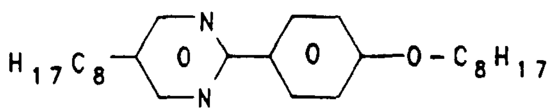 13,08

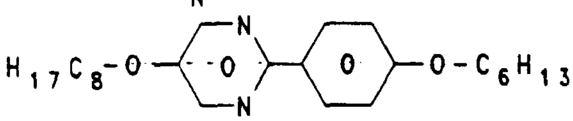 9,11

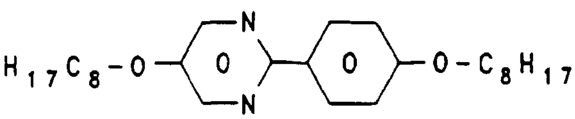 4,21

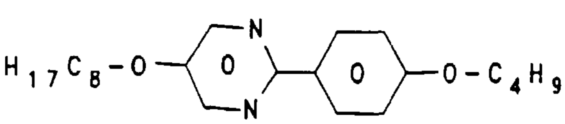 9,62

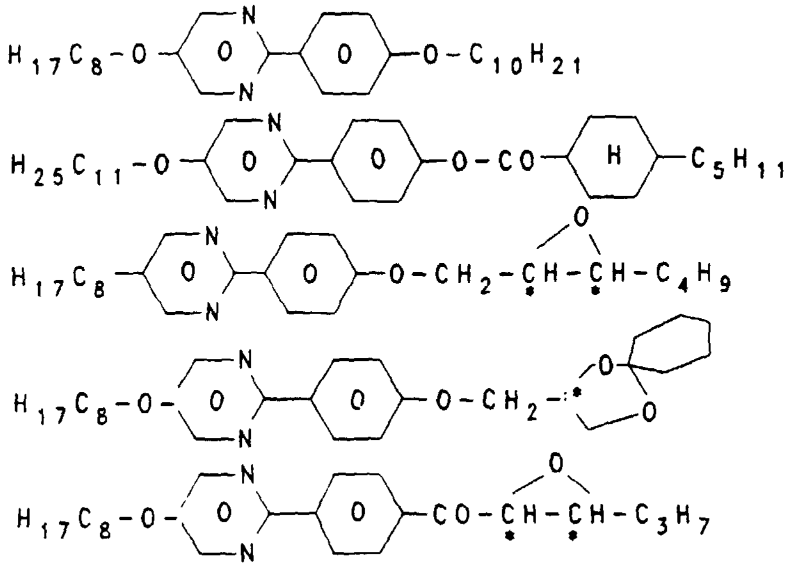

7,65

14,42

10,50

1,99

5,12

und die Phasenfolge $S_C^*$65 $S_A^*$73 N* 86 I mit einer spontanen Polarisation von 38 nC· cm$^{-2}$ bei einer Temperatur von 25°C.

Die eingesetzte FLC-Mischung M2 besitzt folgende Zusammensetzung (in Mol%)

99,5 Mol% FLC-Mischung M1
0,5 Mol%

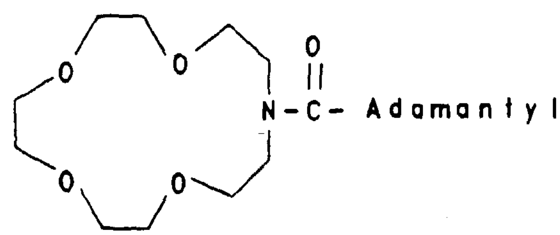

und die Phasenfolge $S_C^*$62 $S_A^*$70 N* 83 I mit einer spontanen Polarisation von 34 nC· cm$^{-2}$ bei einer Temperatur von 25°C.

Die eingesetzte FLC-Mischung M3 besaß folgende Zusammensetzung (in Mol%)

99,5 Mol% FLC-Mischung M1
0,5 Mol%

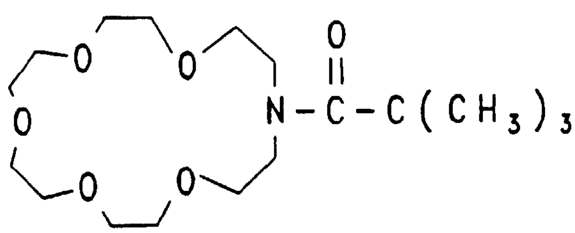

und die Phasenfolge $S_C^*$ 63 $S_A^*$69 N* 86 I mit einer spontanen Polarisation von 33 nC·cm$^{-2}$ bei 25°C.

Der effektive Tiltwinkel und die Orientierung des Flüssigkristalls werden in der "Chevron"-Textur beurteilt, die unmittelbar nach dem Füllen der Zellen entsteht. Die Multiplex- und Schalteigenschaften werden hingegen in der "bookshelf"- bzw. "quasi-book-shelf"-Textur gemessen, die aus der "Chevron"-Textur durch Anlegen von Rechteckspannungen erhalten wird (10-15 V/µm bei 10 Hz, 30 s).

Die folgenden Beispiele werden bei Raumtemperatur gemessen.

| | |
|---|---|
| Beispiel 21 | Es werden Testzellen, die die erfindungsgemäßen Orientierungsschicht P1 enthalten, mit den ferroelektrischen Flüssigkristallmischungen M1 und M2 gefüllt. Die Ergebnisse sind in Tabelle 1 zusammengefaßt. |
| Beispiel 22 | In einer besonderen Ausführungsform wird P1 mit dem Zusatzstoff Z1, wie oben beschrieben, umgesetzt. Die Zellen mit der so erhaltenen Orientierungsschicht werden ebenfalls mit den Mischungen M1 und M2 gefüllt. Die Ergebnisse sind in Tabelle 2 zusammengefaßt. |
| Beispiel 23 | In einer weiteren Ausführungsform wird P1 mit dem Zusatzstoff Z2, wie oben beschrieben, umgesetzt. Die Zellen mit der so erhaltenen Orientierungsschicht werden ebenfalls mit den Mischungen M1 und M2 gefüllt. Die Ergebnisse sind in Tabelle 2 zusammengefaßt. |
| Beispiel 24 | In einer weiteren Ausführungsform wird P3 mit dem Zusatzstoff Z1 wie oben beschrieben umgesetzt. Die Zellen mit der so erhaltenen Orientierungsschicht werden ebenfalls mit den Mischungen M1 und M2 gefüllt. Die Ergebnisse sind in Tabelle 2 zusammengefaßt. |
| Beispiel 25 | Es werden Testzellen, die die erfindungsgemäße Orientierungsschicht P2 enthalten, mit den ferroelektrischen Flüssigkristallmischungen M1 und M2 gefüllt. Die Ergebnisse sind in Tabelle 3 zusammengefaßt. |
| Beispiel 26 | In einer weiteren Ausführungsform wird P2 mit dem Zusatzstoff Z1, wie oben beschrieben, umgesetzt. Die Zellen mit der so erhaltenen Orientierungsschicht werden ebenfalls mit den Mischungen M1 und M2 gefüllt. Die Ergebnisse sind in Tabelle 3 zusammengefaßt. |
| Beispiel 27 | Es werden Testzellen, die die erfindungsgemäße Orientierungsschicht P4 enthalten, mit den ferroelektrischen Flüssigkristallmischungen M1 und M2 gefüllt. Die Ergebnisse sind in Tabelle 4 zusammengefaßt. |
| Beispiel 28 | In einer weiteren Anwendungsform wird P4 mit dem Zusatzstoff Z1 wie oben beschrieben umgesetzt. Die Zellen mit der so erhaltenen Orientierungsschicht werden ebenfalls mit den Mischungen M1 und M2 gefüllt. Die Ergebnisse sind in Tabelle 4 zusammengefaßt. |
| Beispiel 29 | Es werden Testzellen, die die erfindungsgemäße Orientierungsschicht P5 enthalten, mit den ferroelektrischen Flüssigkristallmischungen M1 und M2 gefüllt. Die Ergebnisse sind in Tabelle 5 zusammengefaßt. |
| Beispiel 30 | In einer weiteren Anwendungsform wird P5 mit dem Zusatzstoff Z1 wie oben beschrieben umgesetzt. Die Zellen mit der so erhaltenen Orientierungsschicht werden ebenfalls mit den Mischungen M1 und M2 gefüllt. Die Ergebnisse sind ebenfalls in Tabelle 5 zusammengefaßt. |
| Beispiel 31 | Es werden Testzellen, die die erfindungsgemäße Orientierungsschicht P6 enthalten, mit den ferroelektrischen Flüssigkristallmischungen M1 und M2 gefüllt. Die Ergebnisse sind in Tabelle 6 zusammengefaßt. |
| Beispiel 32 | In einer weiteren Anwendungsform wird P6 mit dem Zusatzstoff Z1 wie oben beschrieben umgesetzt. Die Zellen mit der so erhaltenen Orientierungsschicht werden ebenfalls mit den Mischungen M1 und M2 gefüllt. Die Ergebnisse sind in Tabelle 6 zusammengefaßt. |
| Referenzbeispiel 33 | Als Referenzbeispiel dienen Flüssigkristallzellen der Fa. E.H.C. Japan (Tokyo), die ein Polyimid (PIX 1400 Hitachi) als Orientierungsschicht enthalten. Auch hier werden die Mischungen M1 und M2 eingefüllt. |

Die Tabellen 1 bis 6 zeigen deutlich die Vorteile der erfindungsgemäßen Orietierungsschicht P1 bis P6 und in einer besonderen Ausführungsform mit angebundenem Zusatzstoff Z1 oder Z2.

Die erfindungsgemäßen Schichten unterdrücken "Twist"-Zustände, ermöglichen eine gute Orientierung des Flüssigkristalls und führen zu höheren effektiven Tiltwinkeln als vergleichbare Polyimid-Schichten. Auch das Schaltverhalten

unter Matrix-Display-Bedingungen ist deutlich besser (siehe maximaler Bias) verglichen mit dem Referenzbeispiel.

Beispiel 34 Die schon in Beispiel 22 verwendeten Zellen (P1 mit Zusatzstoff Z1 als Orientierungsschicht) werden mit der Mischung M3 gefüllt. Die Texturumwandlung erfolgt bei einer Temperatur von 50°C mit einer Rechteckspannung von 15 V/μm und 10 Hz 308 lang. Die Zelle wird dann 8 Tage in einem Memory-Zustand belassen und nach dieser Zeit der optische Kontrast im Speicherzustand ($CR_{man}$), unter Multiplexaussteuerung ($CR_{dyn}$), die Transmission des Hellzustands in %, bezogen auf parallele Polarisatoren (= 100 %) und die zum Schalten benötigte CPA (= Produkt aus Schaltimpulshöhe und Schaltimpulslänge für das Schalten von 0 % bis 90 %) bei 30°C, 40°C und 50°C gemessen.

Referenzbeispiel 35 Die verwendeten Testzellen benutzen einen Polyvinylalkohol als Orientierungsschicht, an den der Zusatzstoff Z1 angebunden wurde. Die Testzellen wurden ebenfalls mit M3 gefüllt und in gleicher Weise wie in Beispiel 24 untersucht. Die Ergebnisse von Beispiel 34 und Referenzbeispiel 35 sind in Tabelle 7 zusammengefaßt.

Die erfindungsgemäße Orientierungsschicht liefert im Vergleich zu der Referenzschicht deutlich höhere Kontrastwerte als Folge einer geringeren Resttransmission des dunklen Schaltzustandes. Diese geringere Resttransmission ist auf eine verbesserte Stabilität der Textur zurückzuführen, die besonders bei hohen Temperaturen signifikant wird. Deshalb ist die erfindungsgemäße Orientierungsschicht insbesondere auch für Projektionsanwendungen geeignet (Projektions-Displays), da bei diesem Betrieb Temperaturen von bis zu 60°C auftreten können.

Tabelle 1: Charakterisierung der erfindungsgemäßen Orientierungsschicht

| M1 | Orientierungsschicht P1 | Orientierungsschicht P1 + Z1 | Referenzbeispiel |
|---|---|---|---|
| effektiver Tilt-winkel Θeff (Clorrom-Textur) | 8.5° - 9° | 10.5° | 7° |
| Orientierung des Flüssigkristalls | sehr gut | sehr gut | sehr gut |
| $B^*$max (maximaler Bias bei 50μs Pulsbreite) | ~4 | ~5 | - (kein Fenster vorhanden, daher nicht multiplexbar) |
| Twist Zustände | keine | keine | bilden sich |
| **M2** | **Orientierungsschicht P1** | **Orientierungsschicht P1 + Z1** | **Referenzbeispiel** |
| effektiver Tilt-winkel Θeff (Cl...-textur) | 11° | 11° | 11° |
| Orientierung des Flüssigkristalls | sehr gut | sehr gut | sehr gut |
| $B^*$max (maximaler Bias bei 50μs Pulsbreite) | ~6 | ~7 | ~4 |
| Twist-Zustände | keine | keine | bilden sich |

* Maximal mögliches Verhältnis von Schaltimpulshöhe zu Datenimpulshöhe bei einer Matrixansteuerung unter Verwendung der "quasi-book-shelf"-Textur

Tabelle 2: Charakterisierung der erfindungsgemäßen Orientierungsschicht

| M1 | Orientierungsschicht P1 + Z2 | Orientierungsschicht P3 + ZI | Referenzbeispiel |
|---|---|---|---|
| effektiver Tilt-winkel $\Theta_{eff}$ (Clorrom-Textur) | 10° | 10.5° | 7° |
| Orientierung des Flüssigkristalls | sehr gut | sehr gut | sehr gut |
| $B^{*}max$ (maximaler Bias bei 50µs Pulsbreite) | ~5 | ~5 | - (kein Fenster vorhanden, daher nicht multiplexbar) |
| Twist Zustände | keine | keine | bilden sich |
| **M2** | **Orientierungsschicht P1 + Z2** | **Orientierungsschicht P3 + Z1** | **Referenzbeispiel** |
| effektiver Tilt-winkel $\Theta_{eff}$ (Cl...-textur) | 11° | 11° | 8.5-9° |
| Orientierung des Flüssigkristalls | sehr gut | sehr gut | sehr gut |
| $B^{*}max$ (maximaler Bias bei 50µs Pulsbreite) | ~7 | ~7 | ~4 |
| Twist-Zustände | keine | keine | bilden sich |

* Maximal mögliches Verhältnis von Schaltimpulshöhe zu Datenimpulshöhe bei einer Matrixansteuerung unter Verwendung der "quasi-book-shelf"-Textur

Tabelle 3: Charakterisierung der erfindungsgemäßen Orientierungsschicht

| M1 | Orientierungsschicht P2 | Orientierungsschicht P2 + ZI | Referenzbeispiel |
|---|---|---|---|
| effektiver Tiltwinkel Θeff (Clorrom-Textur) | 9° | 10 | 7° |
| Orientierung des Flüssigkristalls | sehr gut | sehr gut | sehr gut |
| $B^*$max (maximaler Bias bei 50μs Pulsbreite) | ~4 | ~5 | - (kein Fenster vorhanden, daher nicht multiplexbar) |
| Twist Zustände | keine | keine | bilden sich |
| M2 | Orientierungsschicht P2 | Orientierungsschicht P2 + Z1 | Referenzbeispiel |
| effektiver Tiltwinkel Θeff (Cl...-textur) | 11° | 11° | 8.5-9° |
| Orientierung des Flüssigkristalls | sehr gut | sehr gut | sehr gut |
| $B^*$max (maximaler Bias bei 50μs Pulsbreite) | ~5 | ~7 | ~4 |
| Twist-Zustände | keine | keine | bilden sich |

* Maximal mögliches Verhältnis von Schaltimpulshöhe zu Datenimpulshöhe bei einer Matrixansteuerung unter Verwendung der "quasi-book-shelf"-Textur

Tabelle 4: Charakterisierung der erfindungsgemäßen Orientierungsschicht

| M1 | Orientierungsschicht P4 | Orientierungsschicht P4 + Z1 | Referenzbeispiel |
|---|---|---|---|
| effektiver Tilt-winkel Θeff (Clorrom-Textur) | 10° | 10.5° | 7° |
| Orientierung des Flüssigkristalls | sehr gut | sehr gut | sehr gut |
| B*max (maximaler Bias bei 50μs Pulsbreite) | ~4 | ~5 | - (kein Fenster vorhanden, daher nicht multiplexbar) |
| Twist Zustände | keine | keine | bilden sich |
| **M2** | **Orientierungsschicht P4** | **Orientierungsschicht P4 + Z1** | **Referenzbeispiel** |
| effektiver Tilt-winkel Θeff (Cl...-textur) | 11° | 11° | 8.5-9° |
| Orientierung des Flüssigkristalls | sehr gut | sehr gut | sehr gut |
| B*max (maximaler Bias bei 50μs Pulsbreite) | ~5 | ~7 | ~4 |
| Twist-Zustände | keine | keine | bilden sich |

* Maximal mögliches Verhältnis von Schaltimpulshöhe zu Datenimpulshöhe bei einer Matrixansteuerung unter Verwendung der "quasi-book-shelf"-Textur

Tabelle 5: Charakterisierung der erfindungsgemäßen Orientierungsschicht

| M1 | Orientierungsschicht P5 | Orientierungsschicht P5 + Z1 | Referenzbeispiel |
|---|---|---|---|
| effektiver Tiltwinkel $\Theta_{eff}$ (Clorrom-Textur) | 9.5° | 10° | 7° |
| Orientierung des Flüssigkristalls | sehr gut | sehr gut | sehr gut |
| $B^*$max (maximaler Bias bei 50µs Pulsbreite) | ~4 | ~5 | - (kein Fenster vorhanden, daher nicht multiplexbar) |
| Twist Zustände | keine | keine | bilden sich |
| **M2** | **Orientierungsschicht P5** | **Orientierungsschicht P5 + Z1** | **Referenzbeispiel** |
| effektiver Tiltwinkel $\Theta_{eff}$ (Cl...-textur) | 11° | 11° | 8.5-9° |
| Orientierung des Flüssigkristalls | sehr gut | sehr gut | sehr gut |
| $B^*$max (maximaler Bias bei 50µs Pulsbreite) | ~5 | ~7 | ~4 |
| Twist-Zustände | keine | keine | bilden sich |

* Maximal mögliches Verhältnis von Schaltimpulshöhe zu Datenimpulshöhe bei einer Matrixansteuerung unter Verwendung der "quasi-book-shelf"-Textur

Tabelle 6: Charakterisierung der erfindungsgemäßen Orientierungsschicht

| M1 | Orientierungsschicht P6 | Orientierungsschicht P6 + Z1 | Referenzbeispiel |
|---|---|---|---|
| effektiver Tilt-winkel $\Theta$eff (Clorrom-Textur) | 10° | 10.5° | 7° |
| Orientierung des Flüssigkristalls | sehr gut | sehr gut | sehr gut |
| $B^*$max (maximaler Bias bei 50µs Pulsbreite) | ~4 | ~5 | - (kein Fenster vorhanden, daher nicht multiplexbar) |
| Twist Zustände | keine | keine | bilden sich |
| **M2** | **Orientierungsschicht P6** | **Orientierungsschicht P6 + Z1** | **Referenzbeispiel** |
| effektiver Tilt-winkel $\Theta$eff (Cl...-textur) | 11° | 11° | 8.5-9° |
| Orientierung des Flüssigkristalls | sehr gut | sehr gut | sehr gut |
| $B^*$max (maximaler Bias bei 50µs Pulsbreite) | ~5 | ~7 | ~4 |
| Twist-Zustände | keine | keine | bilden sich |

* Maximal mögliches Verhältnis von Schaltimpulshöhe zu Datenimpulshöhe bei einer Matrixansteuerung unter Verwendung der "quasi-book-shelf"-Textur

Tabelle 7:

| Ergebnisse der Beispiele 34 und 35 | | | | | | |
|---|---|---|---|---|---|---|
| M3 | Orientierungsschicht P1 + Z1 | | | Polyvinylalkohol + Z1 | | |
| Temperatur | 30°C | 40°C | 50°C | 30°C | 40°C | 50°C |
| $Cr_{man}$ | 85 | 90 | 90 | 35 | 65 | 60 |
| $Cr_{dyn}$ | 80 | 80 | 80 | 40 | 60 | 55 |
| Transmission (hell) | 90 | 90 | 90 | 80 | 75 | 90 |
| Transmission (dunkel) | 1.06 | 1.00 | 1.00 | 2.29 | 1.08 | 1.50 |

**Patentansprüche**

**1.** Verwendung eines Polymers, enthaltend Maleinimideinheiten der allgemeinen Formel I

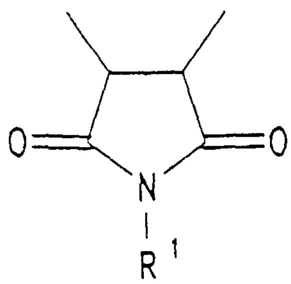

I

in der

$R^1$ Wasserstoff, einen acyclischen oder cyclischen aliphatischen-, einen aromatischen- oder araliphatischen Rest bedeutet, der chiral oder achiral ist, durch funktionelle Gruppen ein- oder mehrfach substituiert sein kann und bei dem ein oder mehrere $CH_2$-Gruppen durch funktionelle Gruppen ersetzt sein können, als Orientierungsschicht in Flüssigkristalldisplays.

**2.** Verwendung nach Anspruch 1, dadurch gekennzeichnet, daß das Polymer als Orientierungsschicht in ferroelektrischen Flüssigkristalldisplays eingesetzt wird.

**3.** Verwendung nach Anspruch 1 oder 2, dadurch gekennzeichnet, daß $R^1$ Wasserstoff, einen aromatischen, aliphatischen, araliphatischen Ring mit 6 bis 24 C-Atomen oder einen verzweigten oder unverzweigten aliphatischen Rest mit 1 bis 40 C-Atomen, der auch chirale Zentren enthalten kann, bei dem ein oder mehrere Wasserstoffatome unabhängig voneinander durch -OH, -F, -Cl, -Br, -CN, $-NR^2R^3$, $-COOR^2$, $-OR^2$, $-OSi(CH_3)_3$, $-SiR^2{}_2R^3$, $-Si(OR^3)_2OR^3$, $-Si(OR^2)_2R^3$, $-QOC-NR^2R^3$ ersetzt sein können, wobei $R^2$, $R^3$ unabhängig voneinander Wasserstoff oder einen Alkylrest mit 1 bis 6 C-Atomen bedeuten, und bei dem ein oder mehrere $CH_2$-Gruppen durch -O-, $-SO_2-$, -CO-, $-CONR_2-$, -CH=CH-, -C≡C-, ersetzt sein können, bedeutet.

**4.** Verwendung nach einem oder mehreren der vorhergehenden Ansprüche, dadurch gekennzeichnet, daß $R^1$ Wasserstoff, einen verzweigten oder unverzweigten Alkylrest mit 1 bis 20 C-Atomen, bei dem eine $CH_2$-Gruppe durch -O- oder -CO- ersetzt sein kann und bei dem ein oder mehrere Wasserstoffatome durch Fluor ersetzt sein können, $-CH(CH_3)-CH_2-(O-CH_2-CH_2-)_nX$, $-CH_2-CH_2-(O-CH_2-CH_2)_nX$, $-CH_2(CH_3)-CH_2-(O-CH_2-CH(CH_3)-)_nX$, $-CH_2-CH_2(O-CH_2-CH(CH_3)-)_nX$, mit n = 1 bis 10 und X = $NH_2$, OH, sowie die Gruppen:

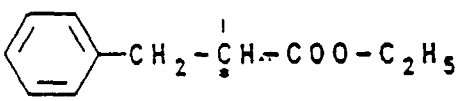 ; 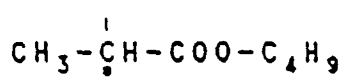 ;

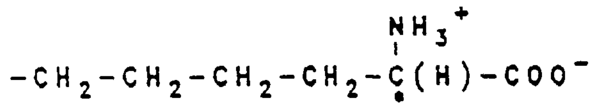

;

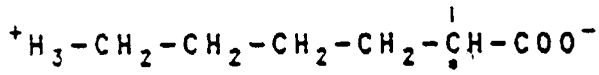

5. Verwendung nach einem oder mehreren der vorhergehenden Ansprüche, dadurch gekennzeichnet, daß der Rest $R^1$ eine zwitterionische Gruppierung darstellt.

6. Verwendung nach einem oder mehreren der vorhergehenden Ansprüche, dadurch gekennzeichnet, daß ein Co- oder höheres Polymer, bestehend aus Maleinimideinheiten der Formel I und Einheiten abgeleitet aus polymerisierbaren ethylenisch ungesättigten Verbindungen der allgemeinen Formel II

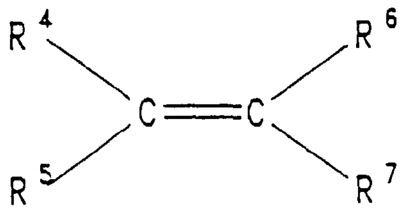

II

in der

$R^4$ bis $R^7$ Wasserstoff, aliphatische und/oder aromatische Reste bedeuten, die durch funktionelle Gruppen ein- oder mehrfach substituiert sein können,

eingesetzt wird.

7. Verwendung nach Anspruch 6, dadurch gekennzeichnet, daß $R^4$ bis $R^7$ Wasserstoff, einen aromatischen Rest mit 6 bis 10 C-Atomen oder eine verzweigte oder unverzweigte Alkylgruppe mit 1 bis 10 C-Atomen bedeuten, in der eine oder mehrere nicht benachbarte $CH_2$-Gruppen durch
-O-, -OOC-, -COO-,
$-Si(CH_3)_2-$ oder -O-CONR$^8$-, und ein oder mehrere H-Atome durch
-OH, -Cl, -Br, $-NO_2$, -CN, -COOR$^9$, -OR$^{10}$,
$-O-Si(CH_3)_3$,-O-CONR$^{11}$R$^{12}$ ersetzt sein können, wobei $R^8$, $R^9$, $R^{10}$, $R^{11}$ und
$R^{12}$ Wasserstoff
oder ein Alkylrest mit 1 bis 5 C-Atomen sind.

8. Amphiphilisiertes Polymer, enthaltend Maleinimideinheiten der Formel I nach Anspruch 1.

9. Verwendung des Polymers nach Anspruch 8 als Orientierungsschicht in Flüssigkristalldisplays.

10. Verwendung nach einem oder mehreren der Ansprüche 1 bis 7, dadurch gekennzeichnet, daß die Flüssigkristalldisplays bei 30 bis 70°C betrieben werden.

11. Orientierungsschicht für Flüssigkristalle, enthaltend ein Polymer nach einem oder mehreren der Ansprüche 1 bis 7.

**Claims**

1. Use of a polymer containing maleimide units of the formula I

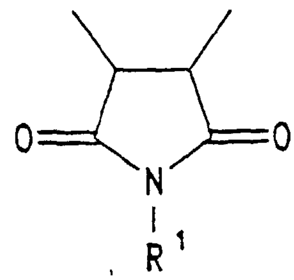

I

in which

$R^1$ is hydrogen, an acyclic or cyclic, aliphatic, aromatic or araliphatic radical which is chiral or achiral, may be monosubstituted or polysubstituted by functional groups and in which one or more $CH_2$ groups may be replaced by functional groups, as alignment layer in liquid-crystal displays.

2. Use as claimed in claim 1, wherein the polymer is employed as alignment layer in ferroelectric liquid-crystal displays.

3. Use as claimed in claim 1 or 2, wherein $R^1$ is hydrogen, an aromatic, aliphatic or araliphatic ring having 6 to 24 carbon atoms or a branched or unbranched aliphatic radical having 1 to 40 carbon atoms, which may also contain chiral centers, in which one or more hydrogen atoms, independently of one another, may be replaced by -OH, -F, -Cl, -Br, -CN, $-NR^2R^3$, $-COOR^2$, $-OR^2$, $-OSi(CH_3)_3$, $-SiR^2{}_2R^3$, $-Si(OR^3)_2OR^3$, $-Si(OR^2)_2R^3$ or $-OOC-NR^2R^3$, where $R^2$ and $R^3$, independently of one another, are hydrogen or an alkyl radical having 1 to 6 carbon atoms, and in which one or more $CH_2$ groups may be replaced by -O-, $-SO_2-$, -CO-, $-CONR^2-$, -CH=CH- or -C≡C-.

4. Use as claimed in one or more of the preceding claims, wherein $R^1$ is hydrogen, a branched or unbranched alkyl radical having 1 to 20 carbon atoms in which one $CH_2$ group may be replaced by -O- or -CO-, and in which one or more hydrogen atoms may be replaced by fluorine, or is $-CH(CH_3)\ -CH_2-\ (O-CH_2-CH_2-)_nX$, $-CH_2-CH_2-\ (O-CH_2-CH_2)_nX$, $-CH_2(CH_3)-CH_2-(O-CH_2-CH(CH_3)-)_nX$ or $-CH_2-CH_2(O-CH_2-CH(CH_3)-)_nX$, where n = 1 to 10 and X = $NH_2$ or OH, or the

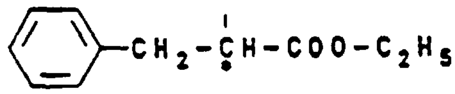 ; 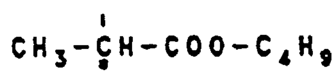 ;

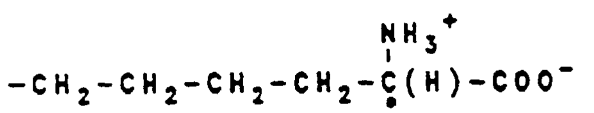 ;

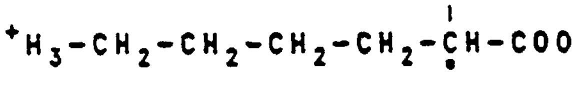

groups.

5. Use as claimed in one or more of the preceding claims, wherein the radical $R^1$ is a zwitterionic group.

6. Use as claimed in one or more of the preceding claims, wherein a copolymer of higher polymer consisting of maleimide units of the formula I and units derived from polymerizable, ethylenically unsaturated compounds of the formula II

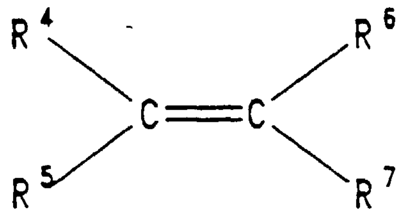

II

in which

$R^4$ to $R^7$ are hydrogen, or aliphatic and/or aromatic radicals which may be monosubstituted or polysubstituted by functional groups,

is employed.

**7.** Use as claimed in claim 6, wherein $R^4$ to $R^7$ are hydrogen, an aromatic radical having 6 to 10 carbon atoms or a branched or unbranched alkyl group having 1 to 10 carbon atoms in which one or more non-adjacent $CH_2$ groups may be replaced by -O-, -OOC-, -COO-, $-Si(CH_3)_2-$ or $-O-CONR^8-$, and one or more H atoms may be replaced by -OR, -Cl, -Br, $-NO_2$, -CN, $-COOR^9$, $-OR^{10}$, $-O-Si(CH_3)_3$ or $-O-CO-NR^{11}R^{12}$, where $R^8$, $R^9$, $R^{10}$, $R^{11}$ and $R^{12}$ are hydrogen or an alkyl radical having 1 to 5 carbon atoms.

**8.** A polymer which has been rendered amphiphilic, containing maleimide units of the formula I as claimed in claim 1.

**9.** Use of the polymer as claimed in claim 8 as alignment layer in liquid-crystal displays.

**10.** Use as claimed in one or more of claims 1 to 7, wherein the liquid-crystal displays are operated at from 30 to 70°C.

**11.** An alignment layer for liquid crystals, containing a polymer as claimed in one or more of claims 1 to 7.

## Revendications

**1.** Utilisation d'un polymère contenant des motifs maléimide de formule générale I

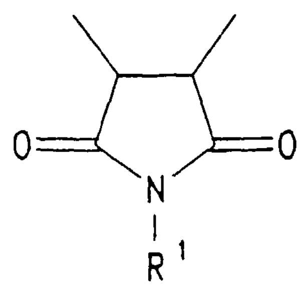

I

dans laquelle

$R^1$ représente l'hydrogène, un radical acyclique ou cyclique aliphatique, un radical aromatique ou araliphatique, lequel radical est chiral ou achiral, pouvant être substitué une ou plusieurs fois par des groupes fonctionnels et dans lequel un ou plusieurs groupes $CH_2$ pouvant être remplacés par des groupes fonctionnels, en tant que couche d'alignement dans les afficheurs à cristal liquide.

**2.** Utilisation selon la revendication 1, caractérisée en ce que l'on utilise le polymère comme couche d'alignement dans les afficheurs à cristaux liquides ferroélectriques.

**3.** Utilisation selon la revendication 1 ou 2, caractérisée en ce que $R^1$ représente l'hydrogène, un cycle aromatique, aliphatique, araliphatique avec 6 à 24 atomes de carbone ou un radical aliphatique ramifié ou linéaire avec 1 à 40

atomes de carbone, qui peut aussi contenir des centres chiraux, dans lequel un ou plusieurs atomes d'hydrogène, indépendamment les uns des autres, pouvant être remplacés par -OH, -F, -Cl, -Br, -CN, $-NR^2R^3$, $-COOR^2$, $-OR^2$, $-OSi(CH_3)_3$, $-SiR^2{}_2R^3$, $-Si(OR^3)_2OR^3$, $-Si(OR^2)_2R^3$, $-OOC-NR^2R^3$, les radicaux $R^2$, $R^3$, indépendamment l'un de l'autre, étant l'hydrogène ou un radical alkyle avec 1 à 6 atomes de carbone et dans lequel un ou plusieurs groupes $CH_2$ pouvant être remplacés par $-SO_2-$, -CO-, $-CONR^2-$, -CH=CH-, -C≡C-.

**4.** Utilisation selon une ou plusieurs des revendications précédentes, caractérisée en ce que $R^1$ représente l'hydrogène, un radical alkyle linéaire ou ramifié avec 1 à 20 atomes de carbone, dans lequel le groupe $CH_2$ pouvant être remplacé par -O- ou -CO- et dans lequel un ou plusieurs atomes d'hydrogène pouvant être remplacés par le fluor,
$-CH(CH_3)-CH_2-(O-CH_2-CH_2-)_nX$, $-CH_2-CH_2-(O-CH_2-CH_2-)_nX$,
$-CH_2-(CH_3)-CH_2-(O-CH_2-CH(CH_3)-)_nX$,
$-CH_2-CH_2-(O-CH_2-CH(CH_3)-)_nX$, avec n = 1 à 10 et X = $NH_2$, OH
ainsi que des groupes

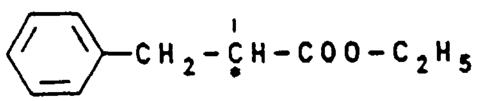 ; 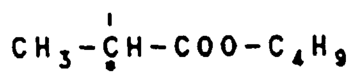 ;

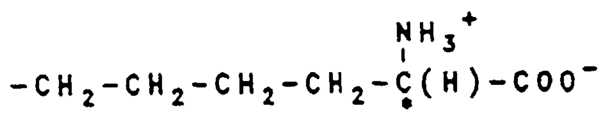 ;

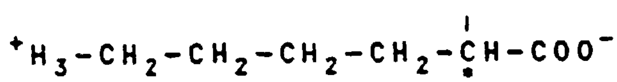

**5.** Utilisation selon une ou plusieurs des revendications précédentes, caractérisée en ce que le radical $R^1$ représente un groupement zwitterionique.

**6.** Utilisation selon une ou plusieurs des revendications précédentes, caractérisée en ce qu'on utilise un co- ou polymère supérieur, composé de motifs maléimide de formule I et de motifs dérivés des composés polymérisables à insaturation éthylénique de formule générale II

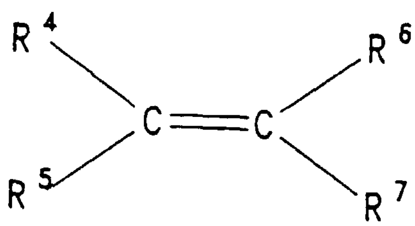 II

dans laquelle

$R^4$ à $R^7$ représentent l'hydrogène et/ou des radicaux aromatiques qui peuvent être substitués par un ou plusieurs groupes fonctionnels.

**7.** Utilisation selon la revendication 6, caractérisée en ce que $R^4$ à $R^7$ représentent l'hydrogène, un radical aromatique avec 6 à 10 atomes de carbone ou un groupe alkyle linéaire ou ramifié avec 1 à 10 atomes de carbone, dans lequel un ou plusieurs groupes $CH_2$ voisins pouvant être remplacés par -O-, -OOC-, -COO-, $-Si(CH_3)_3$, ou $-O-CONR^8-$, et un ou plusieurs atomes de H par -OH, -Cl, -Br, $-NO_2$, -CN, $-COOR^9$, $-OR^{10}$, $-OSi(CH_3)_3$, $-OOC-NR^{11}R^{12}$, $R^8$, $R^9$, $R^{10}$, $R^{11}$ et $R^{12}$ étant l'hydrogène ou un radical alkyle avec 1 à 5 atomes de carbones.

**8.** Polymère amphiphilisé, contenant des motifs maléimide de formule I selon la revendication 1.

**9.** Utilisation du polymère selon la revendication 8 comme couche d'alignement dans les afficheurs à cristal liquide.

**10.** Utilisation selon une ou plusieurs des revendications 1 à 7, caractérisée en ce que l'on exploite les afficheurs à cristal liquide à une température de 30 à 70°C.

**11.** Couche d'alignement pour cristaux liquides contenant un polymère selon une ou plusieurs des revendications 1 à 7.